# EUROPEAN PATENT APPLICATION

(11) **EP 3 407 282 A1**
(43) Date of publication of application: **28.11.2018**
(21) Application number: 18163224.1
(22) Date of filing: 06.01.2011
(51) Int. Cl.: G06Q 20/42, G06Q 20/20, G06Q 20/32

(54) **SYSTEM AND METHOD FOR PERFORMING A TRANSACTION RESPONSIVE TO A MOBILE DEVICE**

(30) Priority: 07.01.2010 US 29287310 P; 04.02.2010 US 30124910 P; 17.05.2010 US 34515810 P; 26.07.2010 US 36745910 P
(62) Divisional of application: 11731739.6
(71) Applicant: Ping Identity Corporation, Denver, Colorado 80202 (US)
(72) Inventor: WEINER, Avish Jacob, 69127 Tel Aviv (IL); NE'MAN, Ran, 52286 Ramat Gan (IL)
(74) Representative: Modiano, Gabriella Diana

(57) **Abstract**

A transaction system for use in cooperation with a client mobile device, the transaction system constituted of: a provider associated device arranged to obtain an identifier associated with the client mobile device; and a transaction server in communication with the provider associated device. The provider associated device is arranged to output a transaction request message comprising information regarding the obtained identifier of the client mobile device. The transaction server, responsive to the transaction request message, is arranged to process the received transaction request message in accordance with one of a plurality of processing paths responsive to an attribute of the received transaction request message.

## Description

### CROSS-REFERENCE TO RELATED APPLICATIONS

This application claims priority from: U.S. Provisional Patent Application S/N 61/292,873 filed January 7, 2010 entitled "System and Method for Providing a Plurality of Products or Services by Using a Code in Cooperation with a Personal Device"; U.S. Provisional Patent Application S/N 61/301,249 filed February 4, 2010 entitled "System and Method for Providing a Product or Service Via Mobile Device Responsive to a Closed Loop Security Code"; U.S. Provisional Patent Application S/N 61/345,158 filed May 17, 2010 entitled "System and Method for Providing a Product or Service Responsive to a Mobile Device and a Secure Element"; and U.S. Provisional Patent Application S/N 61/367,459 filed July 26, 2010 entitled "SYSTEM AND METHOD FOR PROVIDING A PRODUCT OR SERVICE RESPONSIVE TO A MOBILE DEVICE", the entire contents of each of which are incorporated herein by reference.

### TECHNICAL FIELD

The present disclosure relates generally to the field of mobile device transaction systems and in particular to a system and method for performing a transaction responsive to a contactless element associated with a mobile device.

### BACKGROUND ART

Payments by credit or debit cards represent a large portion of consumer spending. Historically, credit or debit cards were encoded with a magnetic stripe, which allows a transaction responsive to reading information encoded on the magnetic stripe, in a secured manner. The device reading the magnetic stripe is typically in communication with the credit card issuer via a transaction network, the credit card issuer ultimately approving the transaction. Credit or debit cards are unfortunately susceptible to theft which may be unrealized by the user for a significant period of time.

Advances in technology have led to the development of contactless smart cards, such as those defined under ISO/IEC 7810 and ISO/IEC 14443, also known as Near Field Communication (NFC). Similar technology is available meeting other standards or protocols generally under the term radio frequency identification (RFID), with the range of RFID typically restricted to be of the same order as that of NFC. The term contactless element (CE) as used throughout this document refers to any short range communication operating under any of NFC, RFID or other short range communication standard with range on the same order as that of NFC, and typically require that the CE be juxtaposed with a reader. The use of optically readable codes are specifically included herein with the definition of a CE. Such CE smart cards may be used for transactions, however since they may be read by any reader within about 4 cm, do not provide for increased security. As such, CE smart cards are typically only used for low value transactions, wherein a small value is pre-loaded on the CE smart card, and the small value is depreciated with each transaction until a limit is reached. Such a CE smart card transaction system is advantageously available for use even if the vendor is not on-line with a clearinghouse or other financial transaction, since the low value transaction may be batch processed at a future time, and the money stored on the CE smart card is denoted herein as "on-CE money". The CE smart card transaction system is denoted herein as an "on-CE payment system". In order to enable larger transactions, a user may be prompted to enter a personal identification number (PIN) onto a keypad associated with the reader.

Mobile devices (MDs) are increasingly being used for financial transactions due to their ubiquity, available screen and input devices. An MD as used herein includes any electronic MD used for personal functionalities such as multimedia playing, data communication over a network or voice communication. One embodiment of an MD is a mobile station, also known as a mobile communication device, mobile phone, mobile telephone, hand phone, wireless phone, cell phone, cellular phone, cellular telephone, mobile handset or cell telephone.

With the development of IEEE 802.11, and the broad establishment of the resultant wireless networks, various MDs have been developed which communicate over available wireless networks in addition to cellular telephone capabilities. Furthermore, various MDs have been developed with the ability to access the Internet both over a wireless network and/or over a cellular network.

The ubiquitous MD, having an associated means for user identification and charging expenses, presents an opportunity to utilize the MD as an electronic wallet. There are several known methods for providing a service or a product, and in particular, payment for products or services other than phone usage or airtime, by using a mobile station. In one system known to the prior art, as described in U.S. Patent S/N 6,584,309 issued June 24, 2003 to Whigham, the entire contents of which is incorporated herein by reference, a consumer requests a product available from a vending machine by dialing a specified telephone number, typically via their mobile station, to a server. The server recognizes the request for the product, creates a transaction record including a billing record for billing the consumer, and communicates a vend code to the consumer's mobile station. The consumer then transmits the received vend code to the machine providing the product.

Unfortunately, such a system is inconvenient requiring a number of steps to perform a simple transaction. For each vending machine, or other service, the consumer must dial or communicate to a specified telephone number, and the vendor must promote the particular number.

CEs have been developed into two main groups, devices which are connected to a controller of the MD, such as to the MD's CPU, and can communicate therewith, and devices which are not connected to the MD's CPU. In the case of CEs connected to the MD's CPU one can find various devices, such as NFC devices on SIM cards, also known as "SIM Contactless Element" (SCE), external cards such as SD cards with NFC devices, SIM add-on Contactless Elements (SCCE), and NFC devices found within the MD's hardware. The above group of devices denoted herein as "embedded CE" (ECE) devices can be used in the same manner as CE devices which are not connected to the MD's CPU for applications where the CE reader communicates with the CE device directly and the communication doesn't rely on any action of the MD's CPU. It is to be noted that iu the event of an optically readable code displayed on a display of the MD may be inherently ECE devices. Additionally, such ECE devices may be loaded with additional user related detail, such as a personal information number (PIN), bank card information, and loyalty card information, without limitation. Such ECE devices are typically associated with a particular financial network, or scheme, and thus do not provide an easy means for a sophisticated user to utilize the CE enhanced MD to replace the multiple forms of payment found in the user's wallet. Furthermore, such a method leads to increasing amounts of personal information held within the MD, thus increasing the possibility of identity theft.

The group of CEs which are not connected to an MD CPU may include NFC or RFID tags, stickers, key fobs, optically readable codes which may be affixed to the MD, and other form factors. Such a CE, when secured in relation to the MD may thus be utilized to provide an identification number read by a reader within proximity of the CE.

Person to person (P2P) payments via MDs have recently gained traction. In P2P payments an MD user, also known as a client, first registers with a P2P server, providing a means for payment, such as debit card or banking information. Typically an application is further downloaded to the client's MD, preferably to the SIM card for enhanced security. To make a payment, the P2P client optionally opens the application, and enters the telephone number or the wallet number of the receiving party, the amount to be transferred, and an identification code, usually known as a PIN. The application may enable the client to select from a plurality of payment methods. The P2P server verifies that the request is received from a valid registered MD, confirms the transaction, arranges for the transfer of the authorized funds, and notifies the receiving party, i.e. the vendor, utilizing the supplied telephone number.

The P2P system thus enables any MD to perform financial push or pull transactions, however is quite cumbersome to use, since it requires entering a long telephone number, an amount and a PIN, without error, for each transaction. Furthermore, all information must be either stored on the client MD, or known by the client.

### SUMMARY OF INVENTION

In view of the discussion provided above and other considerations, the present disclosure provides methods and apparatus to overcome some or all of the disadvantages of prior and present methods of performing a transaction using an MD. Other new and useful advantages of the present methods and apparatus will also be described herein and can be appreciated by those skilled in the art.

In one embodiment, in order to receive a product or service, the provider is supplied with a device, known as a provider associated device (PAD), which preferably comprises a CE reader. A client MD is provided with a CE which is preferably in communication with a controller of the MD, and the client CE is encoded with an identifier, also known as an identification information datum. The client MD may load the CE with an electronic signature, preferably comprising a secure single use transaction code responsive to a key stored on the client MD or on the CE, and a client user input. The client MD is juxtaposed with the CE reader and the CE reader reads the identifier of the client MD CE, and if available the electronic signature.

Preferably the PAD obtains transaction information, such as the type of requested transaction, and amount if relevant, and prepares a transaction request message (TRM). The PAD further transmits the TRM to a transaction server (TS). The PAD may be a physical device or a virtual device such as a web server, without limitation. In another embodiment the TRM is transmitted to the TS from the client MD.

The TS, responsive to the received TRM, examines the TRM, and processes the TRM responsive to at least one attribute of the TRM. In one embodiment, in the event that the TRM exhibits an electronic signature of the client MD, the TS prepares a transaction authorization message (TAM) and transmits the TAM to the appropriate PAD responsive to the TRM, and the PAD may then deliver goods or services responsive to the received TAM. In other embodiment, in the event that the TRM does not exhibit an electronic signature, the TS prepares an authorization request message (ARM) and transmits the prepared ARM to the client MD responsive to the TRM. Preferably, the ARM is arranged to appear as a ready to sign form on the client MD. In the event that the transaction is approved by the client MD, an authorization approval message (AAM) is prepared by the client MD and transmitted from the client MD to the TS. The TS, responsive to the received AAM, prepares a TAM and transmits the TAM to the appropriate PAD responsive to the AAM, and the PAD may then deliver goods or services responsive to the received TAM.

Thus, the present embodiments enable a transaction system comprising: a transaction server comprising a computing device and a communication module, the transaction server arranged to: receive a transaction request message comprising an identifier associated with a client mobile device, the received transaction request message received via the communication module; and process the received transaction request message in accordance with one of a plurality of processing paths responsive to an attribute of the received transaction request message, the plurality of processing paths comprising a first processing path wherein the transaction server is arranged to: in the event that the received transaction request message is electronically signed, transmit, via the communication module, a transaction authorization message to a provider associated device responsive to the received electronically signed transaction request message; and in the event that the received transaction request message is not electronically signed: transmit, via the communication module, an authorization request message to the client mobile device responsive to the received not electronically signed transaction request message; and transmit, via the communication module and responsive to a received authorization approval message from the client mobile device, a transaction authorization message to the provider associated device.

In one further embodiment, the received transaction request message further comprises a transaction type identifier, the attribute comprising the particular transaction type identifier. In another further embodiment the transaction request message further comprises a provider associated device identifier, wherein the provider associated device identifier is associated with a particular transaction type, and wherein the attribute is responsive to the particular transaction type.

In one further embodiment, the transaction system further comprises: a client database in communication with the transaction server, the client database comprising, for each of a plurality of client mobile devices, an address of the client mobile device associated with a readable identifier of a contactless element; and a provider database in communication with the transaction server, the provider database comprising, for each of a plurality of provider associated devices, address information of the provider associated device.

In one yet further embodiment the provider database further comprises transaction processing rules for each of the plurality of provider associated devices, wherein the particular one of the plurality of processing paths is selected responsive to the respective transaction processing rule of the provider database. In another further embodiment the plurality of processing paths further comprises a second processing path associated with a form request, the second processing path comprising: load a form responsive to the received transaction request message; add information to the loaded form responsive to the client database; transmit, via the communication module, an authorization request message to the client mobile device responsive to the received transaction request message, the authorization request message comprising the added information; and release the form with the added information responsive to a received authorization approval message from the client mobile device.

In another yet further embodiment the client database further comprises, for each of the plurality of client mobile devices, capabilities of the client mobile device, and wherein in the event that an authorization request message is transmitted to the client mobile device, the server is further arranged to: prepare the authorization request message responsive to the capabilities of the client mobile device stored on the client database so that the transmitted authorization request message causes the client mobile device to output a visual display in a ready to sign format.

In another yet further embodiment the client database further comprises electronic signature authentication information for each of the plurality of client mobile devices, and wherein the transmission of the transaction authorization message responsive to the received electronically signed transaction request message, comprises the stages of: confirm the validity of the electronically signed transaction request message responsive to the electronic signature authentication information of the client database; prepare the transaction authorization message responsive to the received electronically signed transaction request message; and transmit the prepared transaction authorization message to the provider associated device responsive to address information of the provider database.

In one further embodiment the transaction system further comprises at least one provider associated device comprising a reader arranged to read a contactless element secured in relation to the client mobile device to thereby obtain the identifier associated with the client mobile device. In another further embodiment the transaction system further comprises at least one provider associated device constituted of one of a web page, an interactive voice response server, a short messaging service server, an unstructured supplementary service data server; and a call center.

In one further embodiment the plurality of processing paths are updatable. In one yet further embodiment the transaction system further comprises at least one provider associated device, the at least one provider associated device exhibiting a selector, and wherein the received transaction request message further comprises a transaction type identifier responsive to a setting of the selector, the selector arranged to provide an updatable set of transaction type identifiers responsive to a communication from the transaction server, and wherein the attribute comprises the transaction type identifier. Preferably, the transaction server is arranged to transmit a transaction type identifier update to the provider associated device.

In one further embodiment, the plurality of processing paths further comprises a third processing path, comprising: transmit, via the communication module, an authorization request message to the client mobile device responsive to the received transaction request message. In another further embodiment, the plurality of processing paths further comprises a fourth processing path, comprising: transmit, via the communication module, an authorization request message to the client mobile device responsive to the received transaction request message; and responsive to a received authorization approval message from the client mobile device transmit, via the communication module, a transaction authorization message to the provider associated device.

In one further embodiment the transaction system further comprises the client mobile device, the client mobile device comprising a contactless element secured in relation to the client mobile device and arranged to output the identifier associated with the mobile device responsive to a reader. Preferably the client mobile device further comprises a controller, the controller in communication with the contactless element and arranged to load an electronic signature onto a port of the contactless element responsive to a user input, the contactless element arranged to output the loaded electronic signature responsive to a reader. Further preferably, the client mobile device is arranged to transmit the transaction request message.

In one yet further embodiment the transaction system further comprises a provider associated device comprising a provider identifier, wherein the client mobile device is arranged to read the provider identifier of the provider associated device and utilize the read provider identifier to create the transmitted transaction request message. In another yet further embodiment the client mobile device comprises an application arranged to automatically initiate responsive to a read activity of the contactless element.

In one further embodiment, the plurality of processing paths further comprises a fifth processing path comprising wherein in the event that the attribute is an entry request: confirming, responsive to the received transaction request message, that entry is authorized; and in the event entry is authorized, transmitting, via the communication module, a transaction authorization message to an entry point.

Independently, certain embodiments enable a computer implemented method for performing a transaction responsive to a mobile device, the computer implemented method comprising: receiving a transaction request message comprising an identifier associated with a client mobile device; processing the received transaction request message in accordance with one of a plurality of processing paths responsive to an attribute of the received transaction request message, the plurality of processing paths comprising a first processing path comprising the stages of: in the event that the received transaction request message is electronically signed, transmitting a transaction authorization message to a provider associated device responsive to the received electronically signed transaction request message; and in the event that the received transaction request message is not electronically signed: transmitting an authorization request message to the client mobile device responsive to the received not electronically signed transaction request message; and responsive to a received authorization approval message from the client mobile device transmitting a transaction authorization message to the provider associated device.

In one further embodiment the received transaction request message further comprises a transaction type identifier, the attribute comprising the particular transaction type identifier. In one yet further embodiment the transaction request message further comprises a provider associated device identifier, wherein the provider associated device identifier is associated with a particular transaction type identifier and wherein the attribute is responsive to the particular transaction type.

In one further embodiment, the computer implemented method further comprises: storing, for each of a plurality of client mobile devices, client information comprising: an address associated with the client mobile device associated with a readable identifier of a contactless element, and storing, for each of a plurality of provider associated devices, provider information comprising: address information of the provider associated device. Preferably, the stored provider information further comprises transaction processing rules, wherein the particular one of the plurality of processing paths is selected responsive to the respective stored transaction processing rule.

In one further embodiment, the plurality of processing paths further comprises a second processing path associated with a form request, the second processing path comprising: loading a form responsive to the received transaction request message; adding information to the loaded form responsive to the stored client information; transmitting an authorization request message to the client mobile device responsive to the received transaction request message, the authorization request message comprising the added information; and releasing the form with the added information responsive to a received authorization approval message from the client mobile device.

In one further embodiment the stored client information further comprises, for each of the plurality of client mobile devices, capabilities of the client mobile device, and wherein in the event that an authorization request message is transmitted to the client mobile device, the method further comprises: preparing the authorization request message responsive to the stored capabilities of the client mobile device so that the transmitted authorization request message causes the client mobile device to output a visual display in a ready to sign format. In another further embodiment the stored client information further comprises electronic signature authentication information and wherein the transmitting the transaction authorization message responsive to the received electronically signed transaction request message comprises: confirming the validity of the received electronically signed transaction request message responsive to the stored electronic signature authentication information; preparing the transaction authorization message responsive to the received electronically signed transaction request message; and transmitting the prepared transaction authorization message to the provider associated device responsive to the stored respective address information.

In one further embodiment, the computer implemented method further comprises reading a contactless element secured in relation to the client mobile device to thereby obtain the identifier associated with the client mobile device. In another further embodiment, the plurality of processing paths are updatable.

In one yet further embodiment, the computer implemented method further comprises: storing a plurality of selectable transaction types; for each one of the stored plurality of transaction types, producing an updatable transaction type identifier; and producing the transaction request message, wherein the produced transaction request message comprises the respective transaction type identifier associated with a selected transaction type, wherein the attribute comprises the transaction type identifier. Preferably, the computer implemented method further comprises updating at least one of the updatable transaction type identifiers.

In one further embodiment the plurality of processing paths further comprises a third processing path, comprising: transmitting an authorization request message to the client mobile device responsive to the received transaction request message. In another further embodiment the plurality of processing paths further comprises a fourth processing path, comprising: transmitting an authorization request message to the client mobile device responsive to the received transaction request message; and responsive to a received authorization approval message from the client mobile device transmitting a transaction authorization message to the provider associated device.

In one further embodiment the computer implemented method further comprises outputting the identifier associated with the mobile device responsive to a reader reading a contactless element secured in relation to the client mobile device. Preferably, the computer implemented method further comprises: loading an electronic signature onto the contactless element; and reading the loaded electronic signature.

In one further embodiment the transaction request message is sourced by the client mobile device. In one yet further embodiment the computer implemented method further comprises reading the provider identifier of the provider associated device and utilizing the read provider identifier to create the transmitted transaction request message. In one further embodiment the plurality of processing paths further comprises a fifth processing path comprising wherein in the event that the attribute is an entry request: confirming, responsive to the received transaction request message, that entry is authorized; and in the event entry is authorized, transmitting a transaction authorization message to an entry point.

Independently, certain embodiments enable a client mobile device comprising a controller and a contactless element in communication with the controller, wherein the controller is arranged to, responsive to one of a plurality of potential user inputs: enable a readable port of the contactless element to output an identifier; enable a readable port of the contactless element to output an identifier and an indication that an automatic electronic signature has been received; and enable a readable port of the contactless element to output an identifier and an indication that a electronic signature responsive to user input code has been received.

Additional features and advantages of the invention will become apparent from the following drawings and description.

### BRIEF DESCRIPTION OF DRAWINGS

For a better understanding of the invention and to show how the same may be carried into effect, reference will now be made, purely by way of example, to the accompanying drawings in which like numerals designate corresponding elements or sections throughout.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
FIG. 1A illustrates a high level block diagram of an exemplary embodiment of a transaction system for use in cooperation with a client MD;
FIG. 1B illustrates an alternative type of an MD 20 exhibiting a CE in communication with a controller of the MD;
FIG. 1C illustrates an alternative type of an MD 20 exhibiting a CE and an on-board application providing secured communication with a TS;
FIG. ID illustrates a high level flow chart of the operation of the TS of FIG. 1A;
FIG. 2A illustrates a high level view of an exemplary embodiment of a provider associated device (PAD) with a client MD juxtaposed to a reader thereof;
FIG. 2B illustrates a high level block diagram of certain functional elements of an embodiment of a PAD of FIG. 2A;
FIG. 2C illustrates a high level block diagram of a PAD implemented n cooperation with a provider MD;
FIG. 2D illustrates a high level block diagram of an exemplary embodiment of a TRM;
FIG. 3A illustrates an embodiment of a transaction system wherein the financial settlement institute is implemented with a prior art P2P server, and wherein either a CE or a CE reader is not provided;
FIG. 3B illustrates an embodiment of a transaction system wherein the financial settlement institute is implemented with a prior art P2P server, and wherein a CE is provided affixed to a client MD and a reader is provided to PAD;
FIG. 4A illustrates an embodiment of a transaction system wherein the financial settlement institute of the transaction system of FIG. 1A is implemented with a plurality of options;
FIG. 4B illustrates an embodiment of a transaction system wherein the financial settlement institute is implemented via a point of sale unit in communication with an acquirer;
FIG. 5A illustrates a high level block diagram of an exemplary embodiment of a transaction system for use in cooperation with a client MD having a reader secured in relation to the client MD in communication with a controller of the client MD;
FIG. 5B illustrates a more detailed embodiment of an exemplary embodiment of a TS in communication with a management control module;
FIG. 5C illustrates a high level flow chart of the operation of the TS of FIG. 5A;
FIG. 5D illustrates a high level block diagram of an exemplary embodiment of a transaction system for use in cooperation with a PAD having a keypad, a selector and a PAD ID in communication with a CE of the PAD;
FIG. 5E illustrates a high level flow chart of the operation of the PAD of FIG. 5D to determine the appropriate transaction flow;
FIG. 6A illustrates a high level block diagram of an exemplary embodiment of a TS in cooperation with a client having an associated CE, wherein the PAD is a virtual provider associated device utilized in cooperation with a ticket reservation server;
FIG. 6B illustrates a high level flow chart of the operation of transaction system of FIG. 6A;
FIG. 6C illustrates a high level flow chart of a processing path of the TS responsive to an attribute of a received TRM to respond with a TAM;
FIG. 7A illustrates a high level block diagram of an exemplary embodiment of a transaction system in cooperation with a client MD having an associated CE, wherein one or more PADs are utilized to enable entry and exit via a respective point of entry control responsive to either, or both of, on-CE money and a TAM received from a TS;
FIG. 7B illustrates a high level flow chart of the operation of transaction system of FIG. 7A;
FIG. 8A illustrates a high level flow chart of the operation of a PAD in cooperation with a TS to perform association of the CE with a client MD;
FIG 8B illustrates a high level flow chart of the operation of an on-board application of a client MD in communication with the CE to register on-CE money directly with a TS;
FIG. 8C illustrates a high level block diagram of an exemplary embodiment of a transaction system in cooperation with a PAD to arrange for purchase of airtime from a mobile network operation;
FIG. 8D illustrates a high level flow chart of an exemplary operation of the transaction system of FIG. 8C to arrange for air time purchase;
FIG. 9A illustrates a high level block diagram of a transaction system in cooperation with a client MD having a CE affixed thereon wherein a data information form is provided to a service provider in cooperation with optional client database of a TS;
FIG. 9B illustrates a high level flow chart of the operation of the system of FIG. 9A;
FIG. 10A illustrates a high level flow chart of a processing path of a TS responsive to an attribute of a received TRM to respond with a TAM; and
FIG. 10B illustrates a high level flow chart of a processing path of TS responsive to an attribute of a received TRM to respond with an ARM.

### DESCRIPTION OF EMBODIMENTS

Before explaining at least one embodiment in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting. In particular, the term connected as used herein is not meant to be limited to a direct connection and includes communication of any sort, and allows for intermediary devices or components without limitation.

In the following description, the term mobile device (MD) includes any electronic mobile device used for personal functionalities such as multimedia playing, data communication over a network or voice communication, including but not limited to a mobile station (MS). For clarity, the term MS refers to any mobile communication device, mobile phone, mobile telephone, hand phone, wireless phone, cell phone, cellular phone, cellular telephone, cell telephone, or other electronic device used for mobile voice or data communication over a network of base stations. Although in the following description, communication is described in certain embodiments using an example of cellular communication, particularly, global system for mobile communication (GSM), it will be understood that the scope of the invention is not limited in this respect, and that the communication method used may be based on any suitable communication protocol, including without limitation, Universal Mobile Telecommunications System (UMTS), IEEE 802.11x, IEEE 802.16x and CDMA. The terms "decrypted" and "decoded" are used interchangeably and have the same meaning throughout this document.

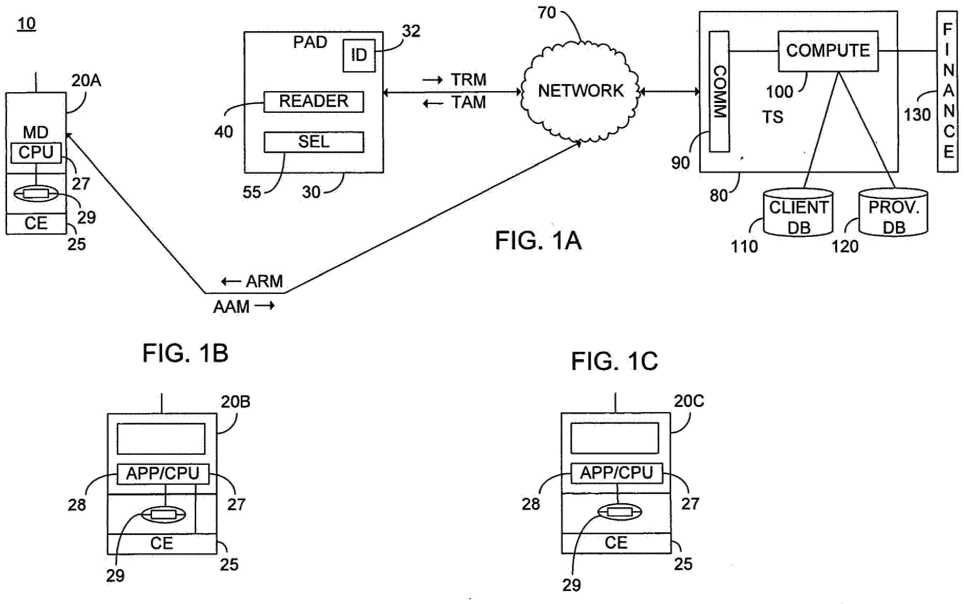

FIG. 1A illustrates a high level block diagram of an exemplary embodiment of a transaction system 10 for use in cooperation with a client MD 20A having a contactless element (CE) 25 secured in relation to client MD 20A, and wherein client MD 20A comprises a controller 27 and a user input device 29 in communication with controller 27. Transaction system 10 comprises: a provider associated device (PAD) 30 comprising a PAD identifier (ID) 32, a reader 40 and an optional selector 55; a network 70; a transaction server (TS) 80 comprising a communication module 90 and a computing device 100; an optional client database (DB) 110; an optional provider DB 120; and an optional financial settlement institute 130. A transaction request message TRM is illustrated transmitted by PAD 30, and a transaction authorization message (TAM) is illustrated transmitted by TS 80 and received by PAD 30. An authorization request message (ARM) is illustrated transmitted by TS 80 and received by client MD 20A, and an authorization approval message (AAM) is illustrated transmitted by client MD 20A and received by TS 80. CE 25 may be affixed to client MD 20A, or may be supplied as part of client MD 20A, without limitation. CE 25 is arranged to output, responsive to a reader to which it is juxtaposed, an identifier which is preferably fixed within CE 25. In other embodiments, as will be described further below, CE 25 is further arranged to output, responsive to the reader, an electronic signature or other data as will be described. PAD ID 32 is preferably found in a fixed memory or other hardware, but may be externally programmable without exceeding the scope.

Preferably MD 20A enables secured bi-directional communication with TS 80, utilizing GPRS or wireless LAN communication links. TS 80 preferably sends an SMS message to MD 20A in order to initiate a secured session, containing a URL link, an in response to the received SMS message the MD client opens the URL thus establishing a secure communication channel.

Reader 40 is arranged to read data from client MD 20A when client MD 20A, particularly CE 25, is juxtaposed with reader 40 of PAD 30. PAD 30 may be in communication with, or incorporated within a point of sale unit, without limitation. Optional selector 55 enables PAD 30 to support a broad range of functionalities such as, but not limited to, Registration, Top-Up, Cash deposit and transfer, On-CE Money balance, debit or credit transactions, form fill in, or purchase functions, without limitation, as will be described further hereinto below. Advantageously, selector 55 may be provided with an updatable set of transaction type identifiers, which may be downloaded from TS 80, as will be described further hereinto below. Preferably, the updatable set of transaction type identifiers may be updated by a communication from TS 80. There is no requirement that selector 55 be supplied and PAD 30 may be provided with a single transaction type identifier, or alternatively a transaction type identifier may be stored on optional provider DB 120 associated with provider ID 32 of PAD 30, and in response to a transaction request message from PAD 30 comprising provider ID 32, TS 80 may automatically retrieve the associated transaction type identifier from optional provider DB 120 responsive to provider ID 32 of PAD 30, as will be described further.

PAD 30 is in bidirectional communication with TS 80 via network 70, TS 80 is further in bidirectional communication with client MD 20A via network 70. There is no requirement that the portion of network 70 utilized for communication between PAD 30 and TS 80 be the same as the portion of the network 70 utilized for communication between TS 80 and client MD 20A, and in one particular embodiment the two network portions 70 are unrelated. Computing device 100 of TS 80 is in communication with communication module 90 of TS 80, with optional client DB 110, with optional provider DB 120, and with optional financial settlement institute 130. In one non-limiting embodiment, financial settlement institute 130 comprises a P2P server of the prior art.

Optional client DB 110 and optional provider DB 120 are illustrated as being external of TS 80, however this is not meant to be limiting in any way, and either optional client DB 110 and/or optional provider DB 120 may be provided internal of TS 80 without exceeding the scope. Financial settlement institute 130 is illustrated as external of TS 80 however this is not meant to be limiting in any way, and financial settlement institute 130 may be integrated within TS 80 without exceeding the scope. Client information related to client MD 20 is stored in optional client DB 110, as will be described below, and provider information related to PAD 30 is stored in optional provider DB 120, as will be described below.

FIG. 1B illustrates an alternative type of MD 20, denoted a client MD 20B, exhibiting a CE 25, which may be utilized with transaction system 10. In particular, client MD 20B of FIG. 1B exhibits a communication channel between controller 27 and CE 25, thus allowing controller 27, which may exhibit an application 28, to load CE 25 with a readable electronic signature responsive to user input via a user input device 29 in communication with controller 27. Preferably, such a readable electronic signature is encrypted with a one-time useable code generated preferably by a pseudo random generator PRG responsive to a key, stored in either CE 25 or in a secured memory portion of MD 20, without limitation, and use of the key may be verified responsive to information stored on optional client DB 110. Controller 27 may be a main processor of client MD 20B, or an additional controller such as a GSM SIM card controller or an SD card controller, or a combination thereof. In one embodiment PIN verification is done by application 28 using a secured memory portion of CE 25 or MD 20B. In other embodiment the one-time useable code is generated by TS 80, and client MD 20B requests TS 80 to transmit the one-time usable code, optionally for every transaction, by a communication channel.

FIG. 1C illustrates yet an additional alternative type of MD 20 which may be utilized with transaction system 10, denoted a client MD 20C, exhibiting a CE 25 and an input device 29 in communication with a controller 27, not requiring a communication channel between CE 25 and controller 27. In particular, controller 27 exhibits an board application 28 which enables secured bi-directional communication with TS 80, such as secured SMS communication, GPRS or wireless LAN capability. In one embodiment, MD 20C does not support data communication links, and secured communication is done by secured, encrypted, SMS messages.

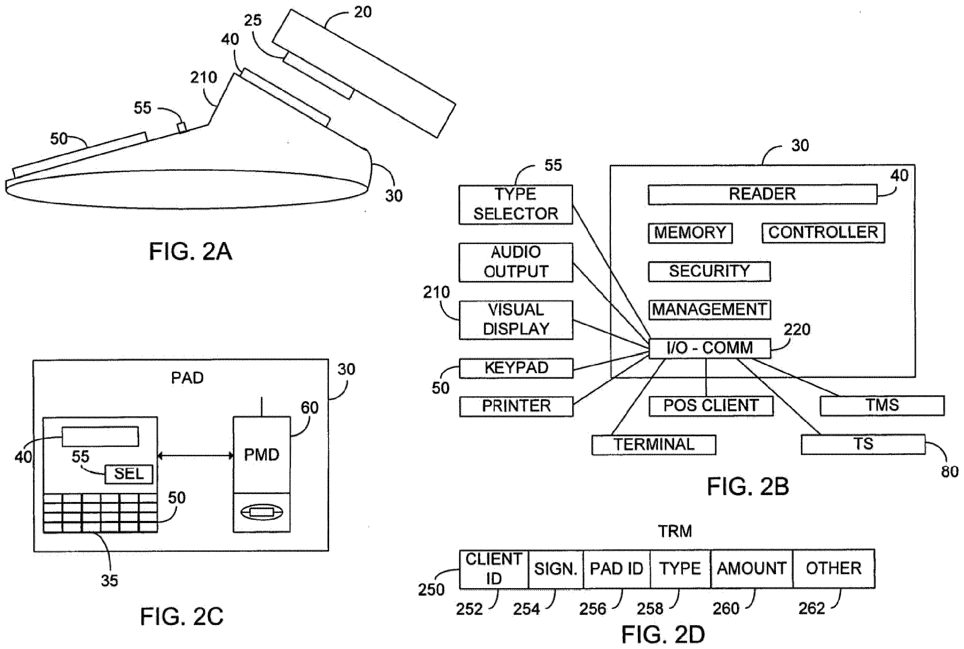

FIG. ID illustrates a high level flow chart of the operation of transaction system 10 of FIG. 1A, which may be utilized with any of the various MDs 20 of FIGs. 1A, 1B or 1C, in accordance with an exemplary embodiment, the figures being described together for ease of understanding. For ease of understanding, client MD 20A, client MD 20B and client MD 20C are generally referred to as client MD 20. Reference is further made to FIG. 2D which illustrates an exemplary embodiment of a TRM.

In operation, in stage 1000, a user associated with client MD 20 registers client MD 20 for use as a transaction and payment device in advance with TS 80, providing as part of the registration process preferably an address, such as a telephone number, for client MD 20 and preferably financial remuneration means such as a debit card or other bank authorization, and further setting a personal identification number or other code, generically referred to herein as a PIN. Optionally, a plurality of financial remuneration means may be supplied and each may be associated with a particular PIN, without limitation. Each of the financial remuneration means represent a particular path, or subset, of optional financial settlement institute 130. In one embodiment the address is the MSISDN of client MD 20. Further preferably, an identifier readable from CE 25 of client MD 20 is further provided, and yet further preferably the type of client MD 20, i.e. information regarding the capabilities of client MD 20 is further provided. The identifier readable from CE 25 is one embodiment always readable responsive to reader 40. Preferably, the address, one or more financial remuneration means, one or more PINs, readable identifier from CE 25, an encoding key, and the type of client MD 20 are stored in optional client DB 110. The telephone number is described herein as an address, since for data messages transferred via a cellular network, the telephone number may be utilized as an address for data. In other embodiment the address is a serial number of client MD 20, and TS 80 responds to a dynamic network address associated with client MD 20 from received messages at TS 80, thus enabling TS 80 to communicate back with the client MD 20. Application 28 is preferably downloaded and stored on client MD 20B or client MD 20C for used by controller 27. Alternatively, application 28 can be preloaded or loaded and stored on or more associated controllers of client MD 20, such as the GSM SIM card or SD card controller, or SIM add-on controller. Preferably, a notification of successful installation, or failure to perform a successful installation, of application 28 is further related to TS 80 and stored on optional client DB 110. Preferably, communication links available to client MD 20, such as whether GRPS or WLAN are supported is further communicated to TS 80 and stored on optional client DB 110. The registration process may include MD 20 hardware details sent from client MD 20 to TS 80, such as IMSI, IMEI or SN. In one particular embodiment, any TRM or AAM messages transmitted by MD 20, as described below, hardware details are further included, enabling TS 80 to reject transactions message wherein client MD 20 hardware details differ from the registered details associated with CE 25. Such an operation prevents the use of a lost or stolen CE 25 with an unauthorized client mobile device.

In optional stage 1010, a client wishing to perform a transaction for which rapid response is desired, prepares client MD 20 for rapid signature provision. In particular, in the event that client MD 20B is provided, the client may pre-select one of a plurality of payment means, and may provide the pre-arranged PIN to application 28 via input device 29. Application 28 functions to load CE 25 with an electronic signature in a readable output port of CE 25 in combination with the readable identifier of CE 25. In an exemplary embodiment, the electronic signature is created with a pseudo-random number function, which, as indicated above, may be verified by TS 80 responsive to data stored on optional client DB 110. The electronic signature may include a code generated in response to one or more of: the specific CMD hardware number, encryption keys, and the result of successful PIN code entrance, and may be the output of a plurality of algorithms. Use of a pseudo-random number thus prevents a replay attack, since the electronic signature is not reusable. The above has been described in an embodiment wherein application 28 functions to load CE 25 with an electronic signature, however this is not meant to be limiting in any way. In an alternative embodiment, application 28 enables, or disables, reading of certain portions of the output memory of CE 25, such that reader 40 is enabled, or disabled, respectively, from reading signature information from controllable output memory portions of CE 25. Similarly, in one embodiment, application 28 may block reader 40 from reading the readable identifier of CE 25 in lieu of, or in addition to, a lack of electronic signature, until a proper user operation is detected via input device 29.

In the event that client MD 20A is provided, optional stage 1010 is preferably not implemented and the user of client MD 20A is may be required to execute an operation in later stages. In the event that client MD 20B is provided, client MD 20 may log on via GPRS of wireless LAN to a site associated with TS 80, optionally responsive to a PIN and/or other input via input device 29. In one embodiment client MD 20B requests TS 80 to supply one or more one-time useable codes for use in present and future transactions as described further below. In the event that client MD 20C is provided, client MD 20C may establish a connection and log on via GPRS of wireless LAN to a site associated with TS 80. There is no requirement that stage 1010 be performed, as will be described further hereinto below. In optional stage 1020, the provider sets selector 55 of PAD 30 to the type of transaction. As indicated above, one or more of: registration, Top-Up, Cash deposit and transfer, On-CE Money balance, debit or credit transactions, form fill in and purchase functions, without limitation, may be selected by selector 55. There is no requirement that optional stage 1020 be performed and as indicated above selector 55 may not be provided.

In stage 1030, the provider enters the amount of the transaction, if appropriate, or other data as appropriate. In stage 1040, the client juxtaposes, or taps, CE 25 to reader 40 of PAD 30 and reader 40 of PAD 30 reads the readable identifier of CE 25, and in the event that in stage 1010 an electronic signature was placed in the output port of CE 25, reader 40 further reads the electronic signature. Optionally, reader 40 further authenticates CE 25. The above has been described in an embodiment wherein the electronic signature is a separate information datum from the readable identifier of CE 25, however this is not meant to be limiting in any way. In another embodiment, an electronic signature changes the readable identifier in such a manner that the readable identifier is electronically signed, without exceeding the scope. There is no requirement that stage 1040 be performed after stage 1030, and the reverse order is particularly contemplated.

In stage 1050, PAD 30 prepares a TRM, preferably incorporating PAD ID 32, or data reflective thereof, and transaction specific information, the transaction type responsive to optional selector 55, the transaction amount, if appropriate, and the obtained identification information of stage 1040. In particular, in the event that an electronic signature was read in stage 1040, the read electronic signature is prepared as part of the TRM. The TRM preferably further comprises a provider ID code required for transaction remuneration, which may be constituted of the above mentioned PAD ID 32, or other identifier. When the read electronic signature is part of the TRM, the TRM is considered to be electronically signed. The TRM further may be encrypted.

Referring in detail now to FIG. 2D, an exemplary embodiment of the prepared TRM of stage 1050 is illustrated, denoted TRM 250. The TRM exhibits a plurality of fields, not all of which are required for any particular transaction. The fields may be left blank, or may be omitted entirely responsive to the particular encoding method utilized. In particular, a client ID field 252, a client electronic signature field 254, a PAD ID field 256, a type field 258; an amount field 260; an other field 262 are illustrated, however this is not meant to be limiting in any way and additional fields may be provided without exceeding the scope. Furthermore there is no particular required structure, and TRM 250 may be transmitted in an encrypted format without exceeding the scope.

Client electronic signature field 254 may comprise one or more subfields. In one particular embodiment a first sub-field may comprise an electronic signature generated responsive to a one-time useable code, generated without receipt of a user PIN input. As such, such an electronic signature may be utilized by TS 80 only for certain transactions, such those of a value below a predetermined maximum. A second sub-field may comprise an electronic signature generated responsive to a user PIN input, preferably encoded with a one-time usable code.

In one embodiment, a default ID of client MD 20 may be readable from CE 25 at all times, without requiring user intervention and providing ease of use. In another embodiment, particularly applicable to client MD 20B, the default ID of client MD 20 may only be readable responsive to a user input. Such a mode prevents unauthorized reading of any client ID. In yet another embodiment the default ID of client MD 20 is only readable in cooperation with a loaded electronic signature, i.e. no identifier is readable from client CE 25 unless an electronic signature is further provided on the readable output port of CE 25. Such a policy provides maximal protection against theft or loss.

In stage 1060, PAD 30 transmits TRM 250 of stage 1050 to TS 80, preferably over a secure connection, where TRM 250 is received by communication module 90, which is arranged to decode any security encryption of transmission and forward readable TRM 250 to computing device 100. In stage 1070 the attributes of received TRM 250 are analyzed, to determine the appropriate processing path. In one embodiment, a particular processing path is followed for all financial transactions less than a predetermined sum, responsive to the value of amount field 260. In another embodiment, a particular processing path is followed dependent on the transaction type indicated by selector 55 and incorporated within TRM 250 as type field 258. A plurality of paths are preferably supported, each responsive to a particular transaction type, as will be described further below.

For ease of understanding, an exemplary embodiment of a pair of processing paths for use in the event of a financial transaction less than a predetermined value, or within a predetermined range of values, will now be detailed. In stage 1080, received TRM 250 of stage 1060 is read and the presence or absence of the electronic signature is detected, i-e- computing device 100 is arranged to determine if TRM 250 is electronically signed responsive to client electronic signature field 254. In the event that TRM 250 includes an electronic signature in client electronic signature field 254, in stage 1090, a TAM is transmitted to PAD 30 responsive to the received electronically signed TRM 250 of stage 1060 with addressing information responsive to PAD ID field 256. Thus, preferably for each PAD ID a destination address is stored on optional provider DB 120, and the TAM is transmitted to PAD 30 responsive to the destination address responsive to data found in PAD ID field 256 of TRM 250. There is no requirement that the sourcing PAD 30 be the destination of the TAM, and an additional field comprising a destination PAD ID may be included without exceeding the scope. TS 80 may further interact with other vendors as a part of the determined processing path.

In an exemplary embodiment the transmission of the TAM of stage 1090 comprises: confirming the validity of the electronically signed TRM responsive to a key stored on optional client DB 110 in cooperation with the read identifier of client MD 20 of the TRM; settling the transaction via optional financial settlement institute 130; preparing the TAM; and transmitting the TAM to PAD 30, responsive to address information stored on optional provider DB 120 as described above. PAD 30, responsive to the received TAM of stage 1090, preferably provides a visible, and/or audible indication that the transaction has been approved, and allows provision of the transaction or service.

In the event that in stage 1080 the TRM was determined to not be electronically signed, or optionally in the event that in stage 1090 the validity of the electronically signed TRM was not successfully confirmed, in stage 1100, an ARM is transmitted, via communication module 90, to client MD 20 requesting approval of the transaction, responsive to the received TRM of stage 1070. Preferably, the ARM is prepared responsive to the capabilities of client MD 20, as stored on optional client DB 110, so that the ARM will cause client MD 20 to output a visual display in a ready to sign format. The term "ready to sign form" as used herein is meant to include any format wherein predetermined locations on the display are consistently used, from transaction to transaction, to request PIN or other signature confirmation inputs, and to display value information. The term "ready to sign form" may further comprise forms which the user has to fill missing piece of information such as a means of payment selection. In an exemplary embodiment a logo, other identifying information of the provider, or other extra information such as an advertisement is displayed in the "ready to sign form", along with the amount to be authorized and a request box requesting that the client authorize the transaction by entering the pre-registered PIN of stage 1000. The "ready to sign form" is preferably thus displayed in accordance with the display parameters of client MD 20. In an embodiment wherein application 28 is provided, the ARM preferably triggers operation of application 28.

Transmission of the ARM is preferably further in accordance with the communication abilities of client MD 20. In particular, in the event that in stage 1010 a link was established between client MD 20 and TS 80, communication is preferably along the pre-established link. In the event that client MD 20 is limited to supporting SMS, or secured SMS (SSMS), communication is in accordance with those limitations, and the appropriate communication link is supplied and controlled by communication module 90. Optionally, information regarding the provider related to the PAD 30, or to the particular transaction, is retrieved from optional provider DB 120, including without limitation a logo, a discount coupon, loyalty and preferred customer benefits or transaction formats are retrieved from optional provider DB 120, and utilized in preparation of the ARM. Thus, in cooperation with an ARM, discount offers may be further displayed on client MD 20.

In stage 1110, responsive to a user input via input device 29, an electronically signed AAM is prepared by client MD 20, and transmitted to TS 80 via network 70, preferably encrypted, either via application 28 by SSMS or via a secured transmission method such as SSL over GPRS or over wireless LAN, such as WiFi. In stage 1120, responsive to the received AAM, a TAM is transmitted to PAD 30 responsive to the received AAM. In one embodiment, the ARM and AAM each comprise the PAD ID of the TRM of stage 1060, and in another embodiment a transaction identifier is utilized by TS 80 to link up the returned AAM with the TRM of stage 1060. The TAM is transmitted to PAD 30 responsive to the destination address of the PAD ID of the TRM. There is no requirement that the sourcing PAD 30 be the destination of the TAM, and an additional field comprising a destination PAD ID may be included without exceeding the scope.

In an exemplary embodiment the transmission of the TAM of stage 1120 comprises: confirming the validity of the electronically signed AAM responsive to a key stored on optional client DB 110 in cooperation with the read identifier of client DB 20 of the TRM; settling the transaction via financial settlement institute 130; preparing the TAM; and transmitting the TAM to PAD 30, responsive to address information stored on optional provider DB 120. PAD 30, responsive to the received TAM of stage 1120, preferably provides a visible, and/or audible indication that the transaction has been approved, and allows provision of the transaction or service. Additionally a receipt message may be sent to client MD 30 either within stage 1090 or within stage 1120. As indicated above, there is no requirement that PAD 30 of stage 1090 be the same PAD 30 as that of stage 1040, and multiple PADs 30 may be supplied without exceeding the scope.

Thus, transaction system 10 processes received TRM 250 in accordance with one of a plurality of paths. The plurality of paths comprises, for at least one attribute, responding to a signed TRM with a TAM, and responding to an unsigned TRM with an ARM for transmission to a client MD 20. Upon receipt of an AAM from the client MD 20, transaction system 10 transmits a TAM to the PAD 30.

There is no requirement that the PAD 30 associated with ultimate delivery be fixed, or be the PAD 30 of the initiating TRM. In particular, the ultimate delivery PAD 30, or simply called the delivery PAD 30, may be a mobile device with a reader 40. Thus, delivery personnel may utilize the TAM to authorize delivery against a client MD 20.

The above has been described in an embodiment wherein CE 25 is dedicated for operation in combination with TS 80, however this is not meant to be limiting in any way. Throughout this document, CE 25 may be further arranged as a combination device with other applications, such as contactless payment systems associated with credit card issuers. Data according to the present embodiments is downloaded to an available readable port of CE 25, without impacting other contactless applications. A PAD 30 arranged to support both other contactless applications and the TS 80 based application of the present embodiments may allow for a choice of payment methods, or may default in accordance with a predetermined set of rules when in communication with a CE 25 supporting multiple protocols.

FIG. 2A illustrates a high level view of an exemplary embodiment of a PAD 30 implemented as a countertop terminal, with client MD 20 having CE 25 affixed thereto juxtaposed to reader 40 and FIG. 2B illustrates a high level block diagram of certain functional elements of an embodiment of PAD 30 of FIG. 2A, wherein the functionality of provider MD 60 is incorporated therein, the figures being described together for clarity.

In particular, PAD 30 exhibits both reader 40, a keypad 50 and selector 55, and further incorporates a display 210. PAD 30 preferably further comprises a memory, a controller, a security module, a management module and an I/O module 220. I/O communication module 220 comprises control and hardware associated with outputs, inputs and communication, and is further associated with display 210, keypad 50, reader 40 and an optional audio output and optional printer. I/O communication module 220 is further optionally in communication with a provider point of sale unit or other terminal, via local communication. I/O communication module 220 is further in communication with TS 80 and may be remotely managed by a terminal management system (TMS). Keypad 50 and type selector 55 may be implemented as any of a keypad, touch screen or array of switches, without limitation.

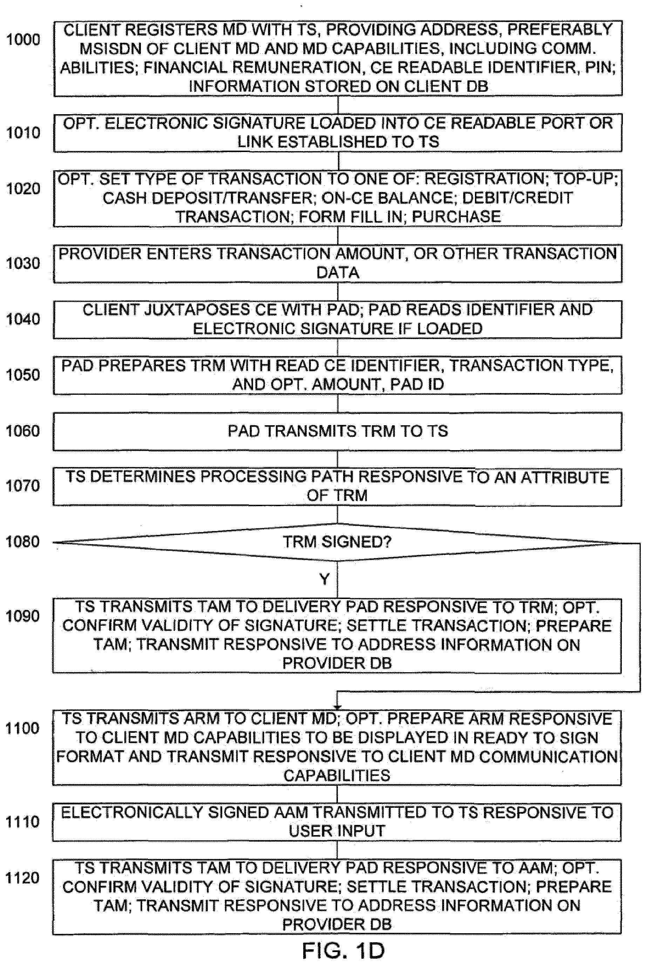

In certain embodiments, security elements of CE 25 comprise thereon an RSA.PAIR, which may be accomplished with a CE 25 in communication with a controller of client MD 20. Application 28, preferably comprises a predefined key, denoted PRE.KEY, and a public key associated with TS 80. Application 28 may also have access to a secure element which comprises the predefined key, and a public key associated with TS 80. TS 80 preferably comprises at least one key for use in secured communication with each PAD 30, stored on optional provider DB 120 of FIG. 1 and at least one key for use in secured communication with each client MD 20, stored on optional client DB 110.

FIG. 2C illustrates a high level block diagram of a PAD 30 implemented in cooperation with a provider MD 60 comprising: a transaction unit 35 in bidirectional communication provider MD 60 preferably by Bluetooth communication, however this is not meant to be limiting in any way and any communication means may be substituted for Bluetooth communication without exceeding the scope. Transaction unit 35 comprises an optional keypad 50, a selector 55, and a reader 40. Keyboard 50 of transaction unit 35 is arranged to retrieve information such as but not limited to transaction amount and client MD identification in the event that a client MD is not provided with an appropriate CE 25, and transmit the input information to provider MD 60. Provider MD 60 may thus generate TRM 250 responsive to the received information and transmit TRM 250 to TS 80 as described above. In one particular embodiment, provider MD 60 utilizes an MSISDN or other identifier thereof in PAD ID field 256. In such an embodiment provider MD 60 preferably further receives the TAM from TS 80 as described above. Such an embodiment allows for the use of legacy payment systems configured to work with a provider MD 60 in cooperation with TS 80 of the present embodiments.

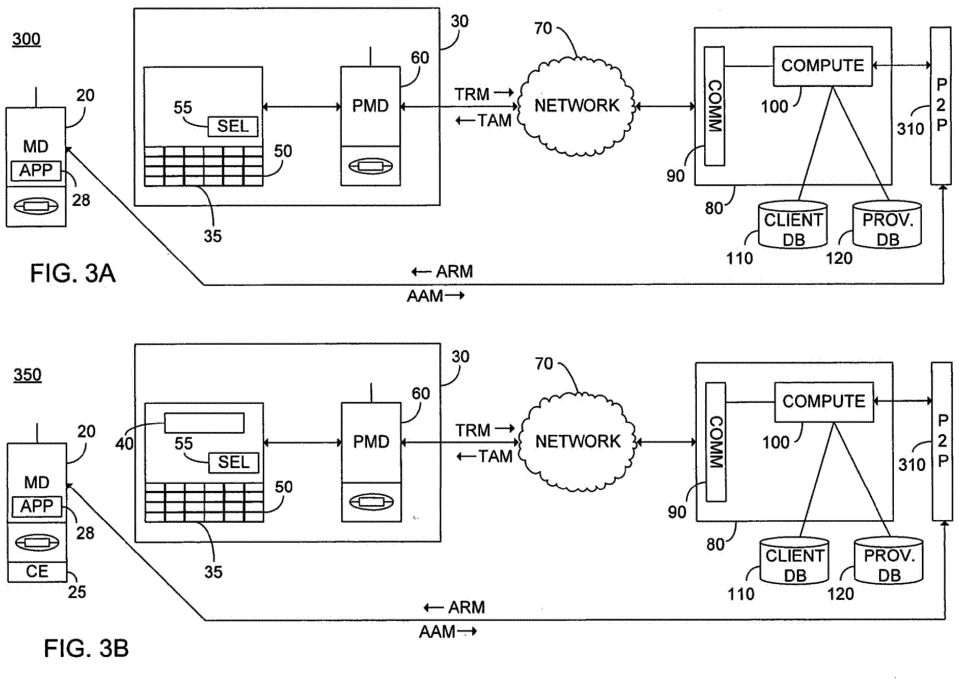

FIG. 3A illustrates an embodiment of a transaction system 300 wherein optional financial settlement institute 130 of transaction system 10 is implemented with a prior art P2P server 310, and wherein either CE 25 is not provided secured to client MD 20, or alternatively (as shown) reader 40 is not provided. In transaction system 300, keypad 50, as described above in relation to FIG. 2C, is utilized by a user of client MD 20 to enter identification information, typically the phone number, or MSISDN of client MD 20. As described above in relation to FIGs. 1A and ID, a TRM, such as TRM 250 described above, is initiated by PAD 30. The TRM preferably comprises the entered identification information and further comprises an PAD ID of PAD 30, transaction type, and a transaction amount. TS 80 is arranged, preferably in cooperation with optional client DB 110 and optional provider DB 120, to convert the received TRM to a request message of the prior art appropriate for P2P server 310, typically comprising a provider MSISDN, a client MSISDN and an amount. Client MD 20 is provided with an application 28, optionally the same application used for the P2P transactions, typically supporting SSMS, and P2P server 310 transmits an SSMS message to client MD 20 requesting approval as an ARM, and upon receipt of an approval AAM by SSMS, typically with an accompanying PIN, transmits a TAM towards provider MD 60. TS 80 passes the TAM through to provider MD 60 responsive to the address of the received TRM.

FIG. 3B illustrates an embodiment of a transaction system 350 wherein optional financial settlement institute 130 of transaction system 10 is implemented with a prior art P2P server 310, and wherein CE 25 is provided secured to client MD 20. In transaction system 350, when client MD 20 is juxtaposed with reader 40, reader 40 reads the readable identifier of CE 25. As described above in relation to FIGs. 1A and 1D, a TRM, such as TRM 250, is initiated by PAD 30. The TRM preferably comprises the read readable identifier and further comprises an identifier of PAD 30, transaction type, and a transaction amount. TS 80 is arranged, preferably in cooperation with optional client DB 110 and optional provider DB 120, to convert the received TRM to a request message of the prior art appropriate for P2P server, typically comprising a provider MSISDN preferably obtained from optional client DB 110 responsive to the readable identifier of CE 25, a provider MSISDN preferably obtained from optional provider DB 120 responsive to the identifier of PAD 30, and a transaction amount. Client MD 20 is loaded with application 28 supporting operation with P2P server 310 typically via SSMS. P2P server 310 transmits an SSMS message to client MD 20 requesting approval as an ARM, and upon receipt of an approval AAM by SSMS, typically with an accompanying PIN, transmits a TAM towards provider MD 60. TS 80 passes the TAM through to provider MD 60, or replaces the address of the TAM responsive to optional provider DB 120, without limitation.

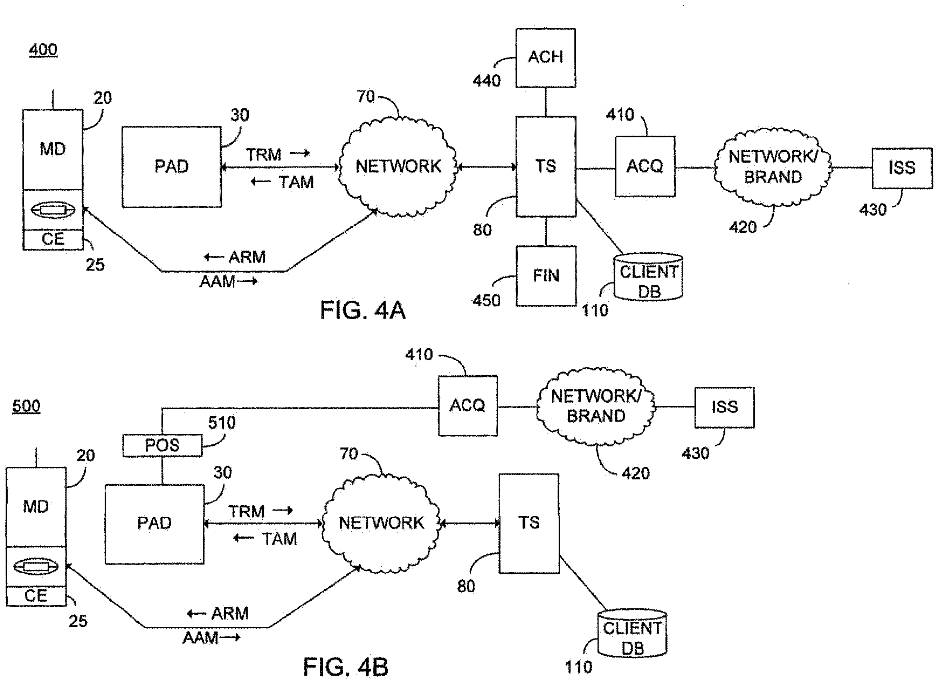

FIG. 4A illustrates an embodiment of a transaction system 400 wherein financial settlement institute 130 of transaction system 10 is implemented with a plurality of options, including, without limitation, an acquirer (ACQ) 410, a financial network (NETWORK/BRAND) 420, such as Visa or MasterCard or American Express, and a credit card issuer (ISS) 430, as is known in the art of financial transactions. TS 80 is supplied with the appropriate information and keys for generating card transactions as detailed below. TS 80 is further provided with access to an automated clearing house (ACH) 440, and to a financial institution 450, such as a bank.

TS 80, responsive to a TRM from PAD 30, may open a USSD communication channel with client MD 20, and enable client MD 20 to select a particular payment method from a list of the client financial remuneration means stored in optional client DB 110. Alternatively, client MD 20 may select a particular payment method as part of an initial authorization, as described above. In yet another embodiment, client MD 20 may select one of a plurality of payment options responsive to the ARM, as described above. If a card-specific PIN is needed, it may be entered into client MD 20 via input device 29 as described above and verified either at TS 80 having the PIN verification value or at ISS 430 using a issuer PIN verification procedure.

In order to perform transactions with ISS 430, if selected by the user of client MD 20, TS 80 responsive to the received AAM generates payment transaction request acceptable by ACQ 410, preferably one of known types in the art of financial transactions. ISS 430 thus receives a prior art transaction request, generated by TS 80, and responds with an authorization, or denial message. TS 80, responsive to an authorization message received from ISS 430 via financial network 420 and ACQ 410 issues the TAM as described above. In one embodiment a particular ACQ 410 is a default acquirer of TS 80, and in another embodiment ACQ 410 is the acquirer associated with the provider of PAD 30. A payment transaction request sent from TS 80 to ACQ 410 preferably includes card detail information including, but not limited to, track 2 information, the card detail information included responsive to track 2 data stored on optional client DB 110. In one embodiment the payment transaction request sent from TS 80 to ACQ 410 includes information signed by TS 80 using a key coordinated with ISS 430. Such a key may be allocated using various methods including per-card, per-TS, or per-client. In another embodiment a signed authorization message received from ISS 430 via financial network 420 and ACQ 410 is verified by TS 80 using an issuer verification key coordinated with ISS 430. Such a issuer verification key may be allocated using various methods including per-card, per-TS, or per-client.

FIG. 4B illustrates an embodiment of a transaction system 500 wherein optional financial settlement institute 130 of transaction system 10 is implemented via a point of sale (POS) unit 510 in communication with PAD 30 and with an ACQ 410. ACQ 410 is in communication with financial network 420, and financial network 420 is in communication with ISS 430, as is known in the art of financial transactions. TS 80 is supplied with the appropriate information and keys for creating card transactions. TS 80, ultimately transmits a TAM to PAD 30, the TAM comprising card transaction information preferably including track 2 information responsive to data stored on optional client DB 110. As described above in relation to FIG. 4A, TS 80 may open a USSD communication channel with client MD 20, and enable client MD 20 to select a particular one of a plurality of credit or debit cards. Alternatively, client MD 20 may select a particular one of a plurality of credit or debit cards as part of an initial authorization, as described above. In yet another embodiment, client MD 20 may select one of a plurality of payment options responsive to the ARM, as described above. If card PIN verification is required by ISS 430, the TAM can include PIN verification indication, following a verification process done at TS 80, or the actual PIN for verification. In both cases the PIN is preferably obtained from the client via input device 29 of client MD 20.

PAD 30, which may act similarly to an EMV card in response to POS 510, upon receipt of the TAM, outputs a credit card transaction request via POS 510. ISS 430 thus receives a prior art transaction request, generated by POS 510, and responds to POS 510 with an authorization, or denial message. Goods or services are thus ultimately delivered responsive to the financial authorization message received at POS 510, initiated by the TAM from TS 80. A confirmation message may be sent to client MD 20 confirming the transaction, without limitation. In another embodiment PAD 30 includes POS 510, or is incorporated therein. Information outputted from PAD 30 to POS 510 includes card details information including but not limited to track 2 information responsive to track 2 data stored on optional client DB 110. In one embodiment this information includes information signed by TS 80 using a key coordinated with ISS 430. Such a key may be allocated using various methods including per-card, per-TS, or per-client. In another embodiment a signed authorization message received from ISS 430 via financial network 420 and ACQ 410 is verified by TS 80-originated information, either at the TS 80 or at PAD 30, using a key coordinated with ISS 430. Such a issuer verification key may be allocated using various methods including per-card, per-TS, or per-client.

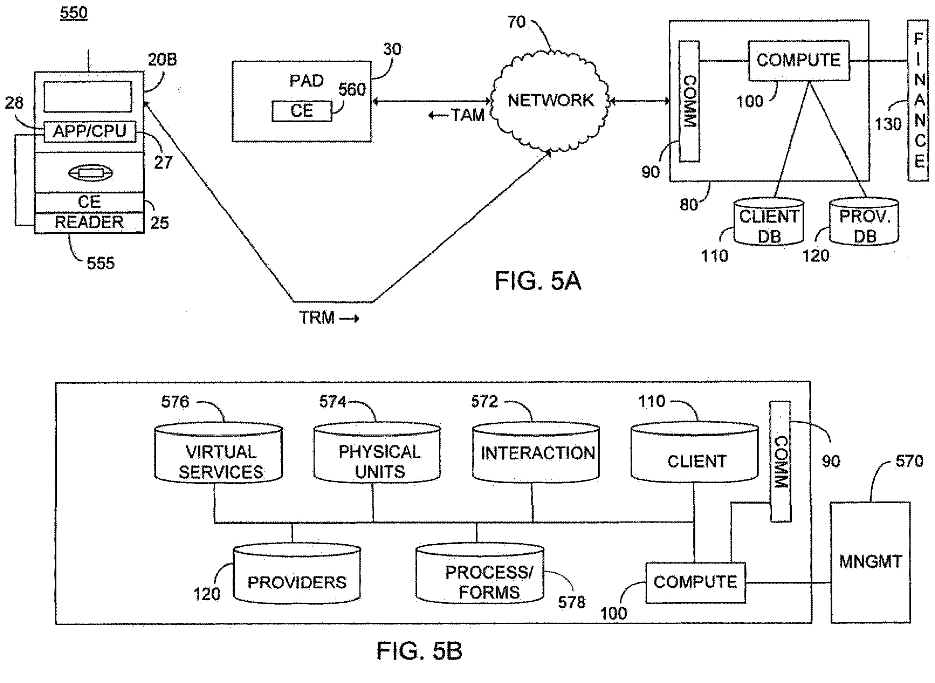

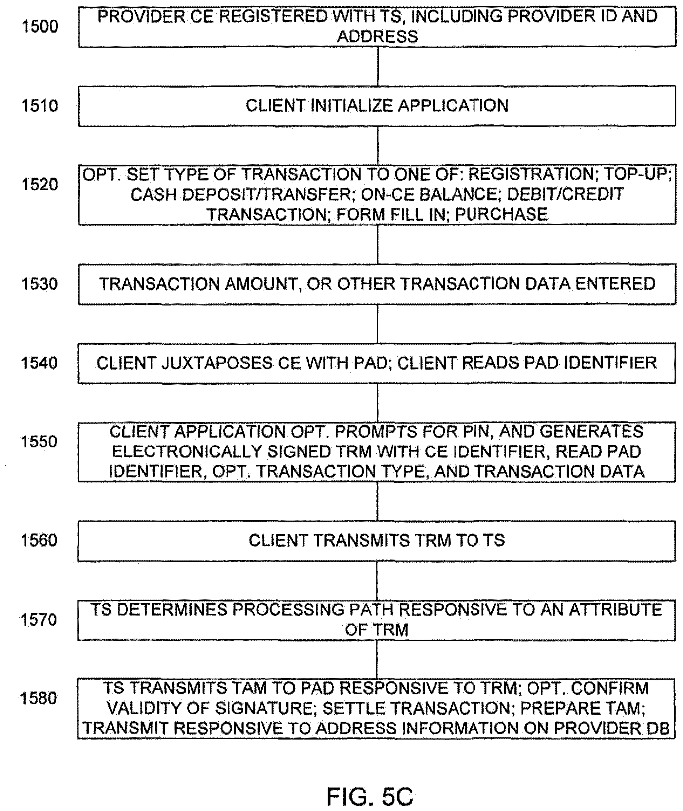

FIG. 5A illustrates a high level block diagram of an exemplary embodiment of a transaction system 550 for use in cooperation with a client MD 20 having a reader 555 secured in relation to client MD 20 in communication with controller 27 of client MD 20, and FIG. 5C illustrates a high level flow chart of the operation of transaction system 550. Reader 555 is preferably integrated with CE 25 of client MD 20, however this is not meant to be limiting in any way. PAD 30 is further arranged to have a CE 560 secured in relation thereto, illustrated without limitation as being secured to an optional provider of PAD 30 and CE 560 is loaded with a readable identifier, such as PAD ID 32. There is no requirement that the readable identifier of CE 560 be the same as PAD ID 32. There is no requirement that CE 560 be in communication with PAD 30. Transaction system 550 is in all respects similar to transaction system 10, and thus will not be further described except to highlight the operational differences, as will be described in relation to FIG. 5C.

In operation, in stage 1500 CE 560 is registered with TS 80 associated with PAD 30, providing as part of the registration process the readable identifier of CE 560 and an address, or other identifier of PAD 30. Client MD 20 is registered with TS 80 as described above in relation to FIG. ID, and an application, denoted application 28, is downloaded enabling the operation as described herein in cooperation with controller 27. Application 28 is preferably downloaded and stored on client MD 20 for use by controller 27.

In stage 1510, a client wishing to perform a transaction in cooperation with PAD 30 for which CE 560 is provided, initializes application 28. In particular, the client may pre-select one of a plurality of payment means. In the event that client MD 20C is provided, the client may log on via GPRS of wireless LAN to a site associated with TS 80.

In optional stage 1520, the client enters the transaction type into application 28. As indicated above, one or more of: registration, Top-Up, Cash deposit and transfer, On-CE Money balance, debit or credit transactions, form fill in and purchase functions, without limitation, may be selected. There is no requirement that optional stage 1520 be performed.

In stage 1530, the transaction amount, or other appropriate transaction data is entered. In one embodiment, the user of client MD 20 enters the transaction amount into application 28. In another embodiment (not shown), CE 560 is in communication with a controller of PAD 30, and PAD 30 enters transaction type and transaction information into a readable portion of CE 560, without limitation. As described above in relation to FIG. 2C PAD 30 may be implemented in cooperation with provider MD 60, without limitation.

In stage 1540, the client juxtaposes, or taps, reader 555 of client MD 20 to CE 560 of PAD 30 and reader 555 of client MD 20 reads the readable identifier of CE 560. Optionally, reader 555 further authenticates CE 560.

In stage 1550, application 28 optionally prompts the user to provide a PIN, and optionally further provides a plurality of payment options. Responsive to the optionally entered PIN and other information if entered, application 28 generates an electronically signed TRM comprising a CE identifier, the read PAD identifier of stage 1540, the optional transaction type of stage 1520 and the transaction data of stage 1530. The generated TRM is in one embodiment in all respects similar to TRM 250 described above.

In stage 1560, client MD 20 transmits the transaction request message of stage 1550 to TS 80, preferably over a secure connection, where the TRM is received by communication module 90, which is arranged to decode any security encryption of transmission and forward the readable TRM to computing device 100.

In stage 1570 the attributes of the received TRM are analyzed, to determine the appropriate processing path. In one embodiment, a particular processing path is followed for all financial transactions for which a TRM is received from any client MD 20. In another embodiment, a particular processing path is followed dependent on the transaction type of the TRM. As described above TS 80 is arranged to support a plurality of transaction paths. Thus, computing device 100 selects the appropriate transaction path, from a plurality of transaction paths preferably stored on optional provider DB 120. In an exemplary embodiment, TS 80 determines, responsive to the received electronically signed TRM being sourced by client MD 20, that a TAM is to be generated and transmitted to PAD 30.

In stage 1580, TS 80 prepares and transmits a TAM to PAD 30 responsive to the received electronically signed TRM of stage 1560, with the address supplied from optional provider client DB 120, as described above in relation to stage 1500.

In an exemplary embodiment the preparation and transmission of stage 1580 comprises: confirming the validity of the electronically signed TRM responsive to a key stored on optional client DB 110 in cooperation with the identifier of client MD 20 of the TRM; settling the transaction via optional financial settlement institute 130; preparing the TAM; and transmitting the TAM to the appropriate PAD 30, responsive to address information stored on optional provider DB 120 in relation to the read identifier of stage 1540. PAD 30, responsive to the received TAM of stage 1570, preferably provides a visible, and/or audible indication that the transaction has been approved, and allows provision of the transaction or service.

The above is described in an embodiment wherein no ARM or AAM is required, however this is not meant to be limiting in any way, and a processing path requiring the transmission of an ARM, and wherein transmission of the TAM is responsive to a received AAM may be supported without exceeding the scope. Advantageously, the appropriate processing path may be stored in optional provider DB 120, associated with each PAD 30, and/or transaction type.

FIG. 5B illustrates a more detailed embodiment of an exemplary embodiment of TS 80 comprising: communication module 90, computing device 100, optional client DB 110, optional provider DB 120, , a remote management control unit 570, an interactions DB 572, a physical units DB 574, a virtual services DB 576 and a process and forms DB 578. Optionally, remote management control unit 570 is provided in communication with computing device 100. Computing device 100 is in communication with each of communication module 90, optional client DB 110, optional provider DB 120, interactions DB 572, physical units DB 574, virtual services DB 576 and process and forms DB 578.

Physical units DB 574 contains information, process rules and control mechanisms for each of the various physical PADs 30 within the transaction system. Virtual services DB 576 contains information, process rules and control mechanisms for each of the various virtual PADs 30 within the transaction system. Process and forms DB 578 contains forms, and processes, executable by TS 80 responsive to PADs 30 within the transaction system, and in various embodiments may be contained as a subset of optional provider DB 120. The various processing paths described herein are in one embodiment stored in process and forms DB 578.

Management control unit 570 is arranged to load each of optional client DB 110, optional provider DB 120, interactions DB 5 72, physical units DB 574, virtual services DB 576 and process and forms DB 578 with updated information. Thus, adding a transaction type to the system may be accomplished by a provider using management control unit 570 without requiring access to each of the PADs 30 within the transaction system. In one particular embodiment, each of the transaction types, appropriate for each PAD 30, is automatically updated responsive to changes in interactions DB 572, or process and forms DB 578. Thus, selector 55 of the various PADs 30 may exhibit additional options responsive to changes in the appropriate database of TS 80. Similarly, adding a new process, or a provider, may be accomplished responsive to management control unit 570.

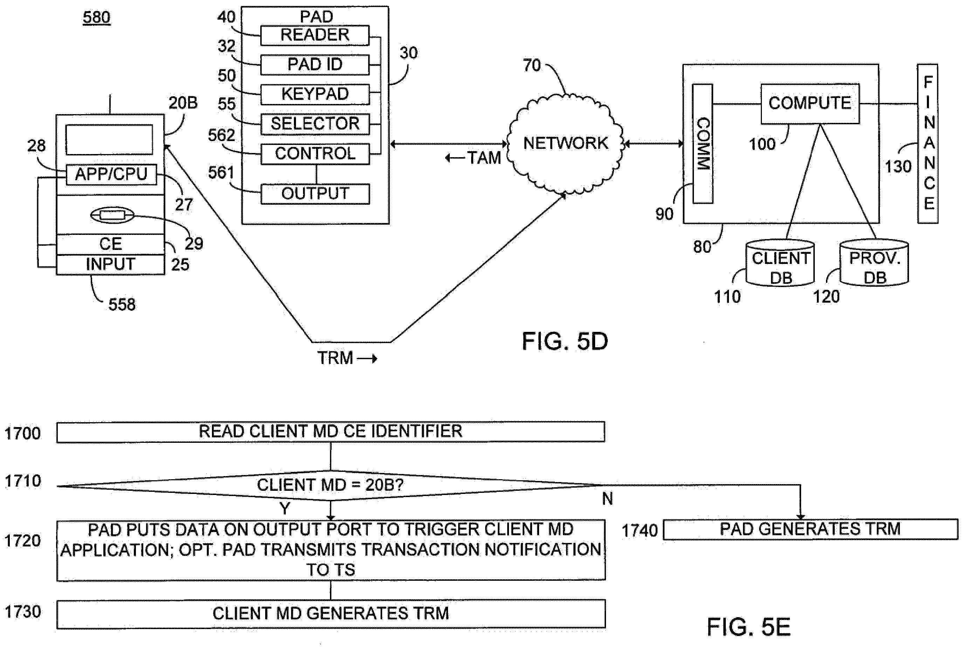

FIG. 5D illustrates a high level block diagram of an exemplary embodiment of a transaction system 580 for use in cooperation with a PAD 30 having a keypad 50, a selector 55 and a PAD ID 32 in communication with a controller 562 and further exhibiting an output port 561. A reader 40 is further provided in communication with controller 562. A client MD 20B further exhibits an input port 558 in communication with controller 27, and particularly responsive to, and in communication with, application 28. In an exemplary embodiment reader 40 is integrated with output port 561 and represents a reading functionality, whereas output port 561 represents an readable output port functionality. Similarly, in an exemplary embodiment input port 558 is integrated with CE 25 and represents a reading functionality, whereas CE 25 represents a readable output port functionality. Controller 562 is arranged to retrieve information from each of keypad 50, selector 55 and PAD ID 32 and store the retrieved information in the readable section of output port 561. In one particular embodiment PAD ID 32, or information related thereto responsive to a cross reference held on optional provider DB 120 is stored by default on the readable section of output port 561.

A provider inputs a transaction amount into keypad 50, or alternatively the transaction amount is automatically loaded from a POS (not shown). A type setting is selected by an input to selector 55, and the transaction amount, and transaction type and PAID ID are loaded into the readable section of output port 561 by controller 562.

A user of client MD 20B juxtaposes CE 25 to reader 40. Reader 40 communicates with CE 25, or input port 558 communicates with output port 561 or preferably application 28 is triggered responsive to the communication. In one embodiment, an interrupt to controller 27 is generated by communication between reader 40 and CE 25. Application 28 reads output port 561 via input port 558 and obtains PAD ID information, transaction type information and type information loaded into the readable section of output port 561. Thus, application 28 may be initiated without requiring user input via input device 29. Application 28, responsive to the read information, composes a "Ready to sign form" displayed for the user, as described above in relation to stage 1550, preferably including a PIN code signing. Responsive to a user entered PIN code thus signing the "ready to sign form", application 28 establishes a connection with TS 80 and sends the TRM to TS 80 as described above in relation to stage 1560. Stages 1570 - 1580 are further performed as described above.

In one embodiment PAD 30 first reads CE 25, and determines responsive to read information whether client MD 20 supports the flow of transaction system 580 as described above, as will be detailed below in relation to FIG. 5E. In one particular embodiment, an output port of CE 25 is thus first loaded with an identifier indicating the client MD 20 supports a client MD initiated TRM, thus triggering the transaction flow of transaction system 580.

FIG. 5E illustrates a high level flow chart of the operation of controller 562 of PAD 30 of transaction system 580 to determine the appropriate TRM generation path. In stage 1700, controller 562 operates reader 40 to read an identifier of CE 25. In stage 1710, the read identifier of stage 1700 is examined to determine if it is indicated of a client MD 20B, i.e. is the identifier indicative of support for a client MD generated TRM.

In the event that the read identifier is indicative of support for a client generated TRM, in stage 1720 the PAD puts loads data retrieved from each of keypad 50, selector 55 and PAD ID 32 to a readable output port of reader 40. There is no requirement that all the data be so loaded. Application 28 is triggered into operation and then reads the loaded data from CE 25.

Optionally, a transaction notification is sent to TS 80 to enable preprocessing prior to receive a TRM to be generated by client MD 20B. In stage 1730, client MD 20B generates the TRM.

In the event that in stage 1710 the read identifier is indicative that support is not provided for a client generated TRM, in stage 1740 PAD 30 generates the TRM as described above.

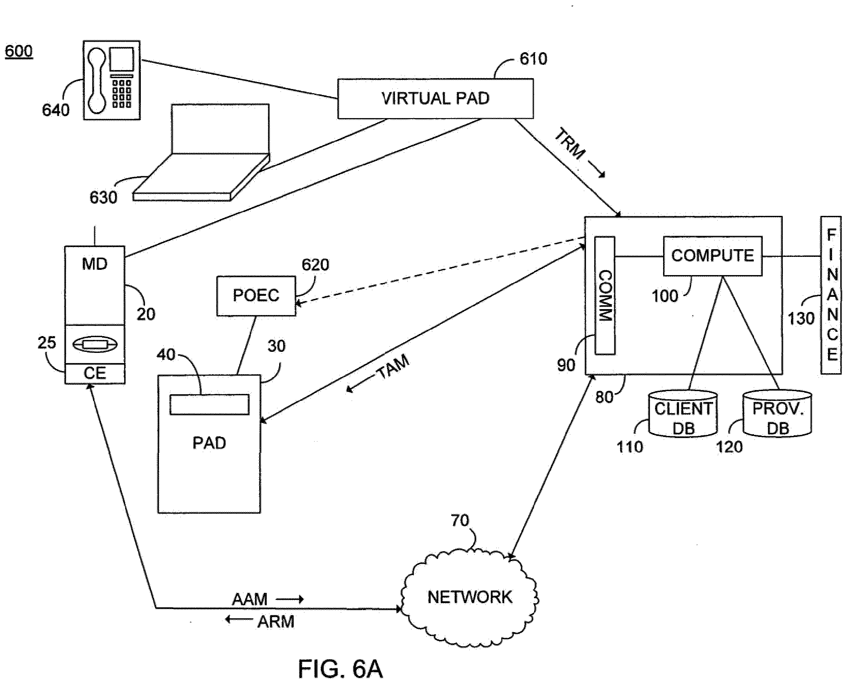

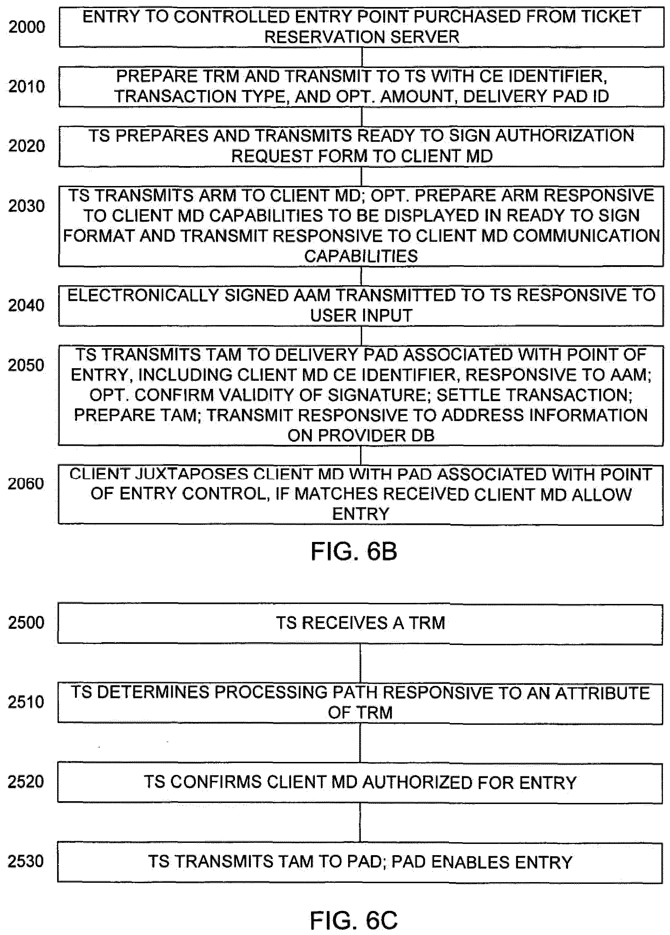

FIG. 6A illustrates a high level block diagram of an exemplary embodiment of a transaction system 600 in cooperation with a client MD 20 having an associated CE 25, wherein PAD 30 is utilized in cooperation with a virtual PAD 610, such as a ticket reservation server, to enable entry into a pay per entry event via a point of entry control (POEC) 620. PAD 30 is in communication with POEC 620, or incorporated within POEC 620, without limitation. Transaction system 600 further comprises TS 80, network 70, a computer 630 and a telephone 640. Each of computer 630 and telephone 640 are in communication with virtual PAD 610, which may comprise one of a web site, an IVR server or a call center, or any combination thereof, without limitation. Virtual PAD 610 is arranged to receive orders from any of client MD 20, computer 630 and a telephone 640, without limitation. TS 80 is in communication with client MD 20 via network 70, and TS 80 is further in communication with PAD 30. PAD 30 is further in optional communication with POEC 620. FIG. 6B illustrates a high level flow chart of the operation of transaction system 600 of FIG. 6A in accordance with an exemplary embodiment, the figures being described herein together for ease of understanding and clarity..

In stage 2000 entry to a controlled entry point, such as an entertainment event is requested to be purchased from virtual PAD 610 via one of client MD 20, computer 630 connecting via a web based or other network and a user communication via telephone 640 typically via an interactive voice response, or via a call center. Transaction remuneration is requested to be performed by an account associated with client MD 20. In particular, transaction remuneration is requested to be performed in cooperation with TS 80. Stage 2000 further comprises acquiring an identifier of client MD 20 by any one of a plurality of methods, and optionally requiring a digital signature code, originated by a user of client MD 20, preferably further comprising a one time useable code, to be used for verification of a secured user transaction.

In stage 2010 virtual PAD 610 prepares a TRM and transmits it to TS 80, including amount of transaction, an identifier of client MD 20, as supplied in stage 2000, transaction type, and an identifier of the delivery point PAD 30, and transmits the prepared transaction record to TS 80, as described above in relation to TRM 250. In stage 2020 TS 80 validates the transaction record, preferably confirming the transaction value is within pre-arranged limits, and prepares an ARM for transmission to client MD 20. In particular, the received TRM is analyzed and the processing path is determined responsive to an attribute of the TRM. In an exemplary embodiment, all TRMs received from virtual PAD 610 follow the transaction path detailed below. In another embodiment (not shown), other transaction paths, including requiring a second authorization, may be provided responsive to a value, a pre-arranged group of client MDs 20, or based on other pre-loaded criteria stored in optional provider DB 120 without limitation. In an exemplary embodiment if the client MD 20 has provided a digital signature code as part of stage 2000, and the digital signature code is verified, the AAM and ARM may not be required.

In stage 2030, an ARM is transmitted, via communication module 90, to client MD 20 requesting approval of the transaction, responsive to the received TRM of stage 2010. Preferably, the ARM is prepared responsive to the capabilities of client MD 20, as stored on optional client DB 110, so that the ARM will cause client MD 20 to output a visual display in a ready to sign format. In an exemplary embodiment a logo, other identifying information of the provider, or other extra information such as an advertisement is displayed in the "ready to sign form", along with the amount to be authorized and a request box requesting that the client authorize the transaction by entering the pre-registered PIN of the registration stage, as described above in relation to FIG. ID. The "ready to sign form" is preferably thus displayed in accordance with the display parameters of client MD 20. In an embodiment wherein application 28 is provided, the ARM preferably triggers operation of application 28.

As described above, the term "ready to sign form" as used herein is meant to include any format wherein predetermined locations on the display are consistently used, from transaction to transaction, to request PIN or other signature confirmation inputs, and to display value information.

Transmission of the ARM is preferably further in accordance with the communication abilities of client MD 20. In particular, the ARM may cause the display of a link on a display portion of client MD 20, and client MD 20 may utilize the link to establish an encryption enabled connection between client MD 20 and TS 80. In the event that client MD 20 is limited to supporting SMS, or SSMS, communication is in accordance with those limitations, and the appropriate communication link is supplied and controlled by communication module 90. Optionally, information regarding the provider related to PAD 30 and/or virtual PAD 610, or to the particular transaction, is retrieved from optional provider DB 120, including without limitation a logo, a discount coupon, loyalty and preferred customer benefits or transaction formats, and utilized in preparation of the ARM. Thus, in cooperation with an ARM, discount offers may be further displayed on client MD 20.

In stage 2040, responsive to a user input, an electronically signed AAM is prepared by client MD 20, and transmitted to TS 80 via network 70, preferably encrypted either via application 28 by SSMS or via a secured channel such as SSL over GPRS or over wireless LAN such as WiFi. In stage 2050, responsive to the received AAM, a TAM is transmitted to PAD 30 responsive to the received AAM, optionally in delayed batches. In one embodiment, the ARM and AAM each comprise an ID of PAD 30 of the TRM of stage 2010, and in another embodiment a transaction identifier is utilized by TS 80 to link up the returned AAM with the ARM of stage 2030 and the TRM of stage 2010. The TAM is transmitted to PAD 30 responsive to the destination address of the ID of PAD 30 of the TRM of stage 2010.

In an exemplary embodiment the transmission of the TAM of stage 2050 comprises: confirming the validity of the electronically signed AAM responsive to a key stored on optional client DB 110 in cooperation with the read identifier of client DB 20 of the TRM; settling the transaction via financial settlement institute 130; preparing the TAM; and transmitting the TAM to the PAD 30, responsive to address information stored on optional provider DB 120. The TAM comprises a readable identifier of CE 25 associated with client MD 20, preferably retrieved from optional client DB 110, with an indication of the particular entry authorization. In one further embodiment the TAM comprises a one-time useable code associated with client MD 20 and with the particular event for which entry is authorized. The one-time useable code may be further sent to client MD 20 in a receipt message.

In stage 2060, client MD 20 is juxtaposed, or "tapped" to reader 40 of PAD 30 and PAD 30 reads identification information from CE 25 and compares with the stored entry authorization records. In the event that the read identification information of CE 25 matches a stored entry authorization record for the present event, PAD 30 enables entry by transmitting a signal to POEC 620 thereby activating POEC 620, and preferably confirmation of actual entry is transmitted by PAD 30 to TS 80. In the event that the read identification information of CE 25 does not match the stored entry authorization record for the present event, PAD 30 outputs an audio and/or visual indication that entry has not been authorized.

Further to the one-time useable code embodiment described above in relation to stage 1050, a user of a client MD 20 approaching PAD 30 preferably activates application 28 in specific entry mode, causing application 28 of client MD 20 to further present specific entry one-time useable code in CE 25 when juxtaposed to reader 40 of PAD 30. Thus PAD 30 can further match with its stored entry authorization record a specific one time code in addition to identification information.

FIG. 6C illustrates a high level flow chart of a processing path of TS 80 responsive to an attribute of a received TRM to respond with a TAM, which may be used in cooperation with any of transaction systems 10, 300, 400, 500, 550 or 600 without limitation, but may particularly applicable to the entry system of transaction system 600. Such a processing path may be selected responsive to a particular PAD ID, or to a particular client MD readable identifier without limitation.

In stage 2500 a TRM is received by TS 80. In stage 2510 the attributes of the received TRM are analyzed, to determine the appropriate processing path. In stage 2520, responsive to attributes of TRM the processing path associated with automatic TAM response if the client MD ID is on an authorized list stored in optional client DB 110 is selected, and TS 80 confirms that the client MD readable identifier of the received TRM of stage 2500 is authorized for entry to the PAD 30 whose ID is part of the received TRM of stage 2500.

In stage 2530, in the event that the client MD readable identifier is consonant with an identifier on the list, TS 80 transmits a TAM to the PAD 30 responsive to the PAD ID of the TRM of stage 2500. PAD 30, responsive to the received TAM of stage 2530, preferably provides a visible, and/or audible indication that the transaction has been approved, and allows entry for the user of client MD 30.

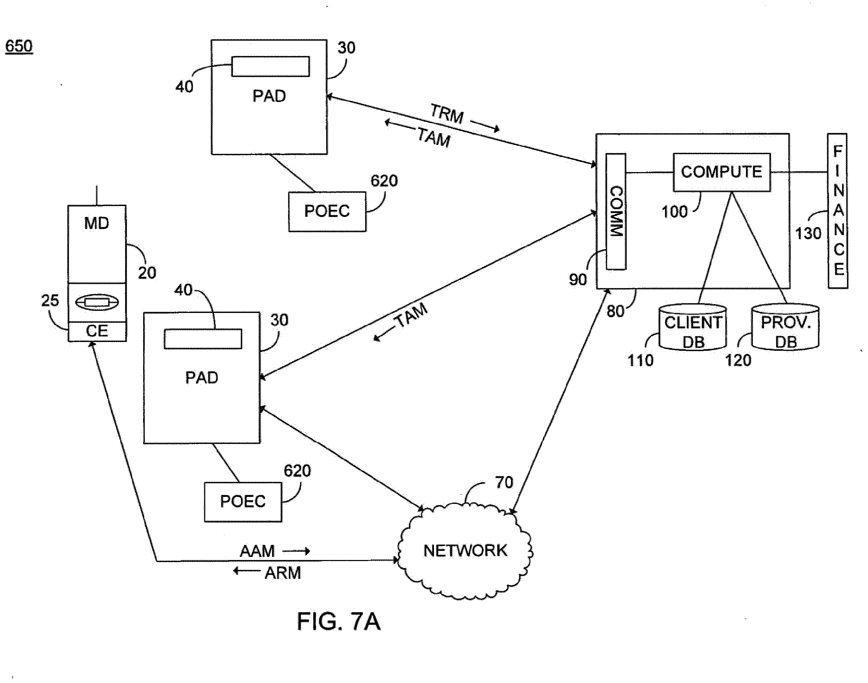

FIG. 7A illustrates a high level block diagram of an exemplary embodiment of a transaction system 650 in cooperation with a client MD 20 having an associated CE 25, wherein one or more PADs 30 are utilized to enable entry and exit via a respective POEC 620 responsive to either, or both of, on-CE money and a TAM received from a TS 80. Each PAD 30 is in communication with TS 80 and with a respective POEC 620, and comprises a reader 40. PAD 30 may be incorporated within POEC 620. TS 80 is further in communication with client MD 20 via a network 70. First PAD 30 is associated with a point of entry into a controlled access area, such as a parking lot or transportation system, and second PAD 30 is associated with a point of exit from the controlled access area, however this is not meant to be limiting in any way, and a single PAD 30 may control both entry and exit. More than two PADs 30 may be provided without exceeding the scope.

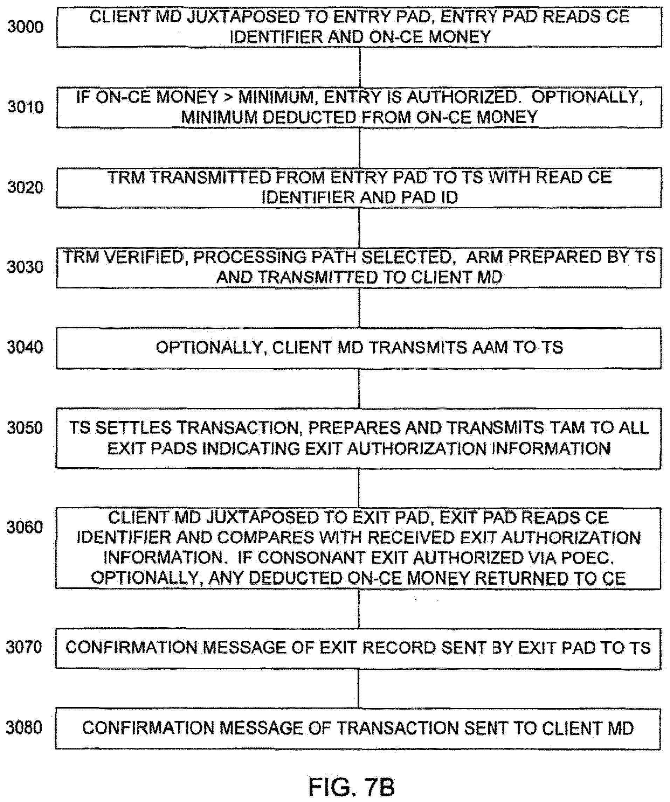

FIG. 7B illustrates a high level flow chart of the operation of transaction system 650 of FIG. 7A in accordance with an exemplary embodiment, the figures being described herein together for ease of understanding and clarity.

In stage 3000, client MD 20 is juxtaposed or "tapped" to reader 40 of first PAD 30, acting as an entry PAD 30, and entry PAD 30 reads the readable identifier from CE 25, and further obtains data regarding an amount of on-CE money available on the CE 25. In stage 3010, entry is authorized by entry PAD 30 by activating the associated POEC 620 via the appropriate signal. In the event that the read on-CE money of stage 3000 is above a predetermined minimum amount, money may be promptly deducted. In one embodiment the predetermined minimum amount is deducted from the on-CE money of CE 25 by entry PAD 30. In one embodiment the predetermined minimum amount is the maximum tariff for the controlled access area, and in another embodiment a fixed amount of on-CE money is deducted.

In stage 3020, a TRM including the read identifier of CE 25 of stage 3000 and the optional deducted on-CE money is transmitted to TS 80 including an identifier of entry PAD 30, and optionally an identifier of the transaction type. The transmitted TRM may be in all respects similar to TRM 250 described above. Alternatively, the identifier of entry PAD 30 is associated in optional provider DB 120 as associated only with entry event TRMs. In stage 3030 the received TRM is verified, and the appropriate processing path is determined responsive to an attribute of the TRM. In one embodiment, the provider ID, i.e. the identifier of entry PAD 30, is only associated with an entry event thus dictating the processing path to be further described. Other alternate paths, responsive to attributes of the TRM may be provided without exceeding the scope. TS 80 is further operative to prepares an ARM for transmission to client MD 20, responsive to the address stored on optional client DB 110 associated with the read identifier of CE 25 of stage 3000. The ARM is transmitted, via communication module 90, to client MD 20 requesting alternate direct payment of the transaction, i.e. an alternate payment from the initial use of on-CE money, responsive to the received TRM of stage 3020. Preferably, the ARM is prepared responsive to the capabilities of client MD 20, as stored on optional client DB 110, so that the ARM will cause client MD 20 to output a visual display in a ready to sign format. In an exemplary embodiment a logo, other identifying information of the provider, or other extra information such as an advertisement is displayed in the "ready to sign form", along with the amount to be authorized and a request box requesting that the client authorize the transaction by entering the pre-registered PIN of the registration stage, as described above in relation to FIG. ID. The "ready to sign form" is preferably thus displayed in accordance with the display parameters of client MD 20. In an embodiment wherein application 28 is provided, the ARM preferably triggers operation of application 28. In one embodiment, in the event that TRM includes a client MD digital signature an ARM and AAM message may not be required. In one non-limiting embodiment, top-up of the on-CE money may be provided as one of the options.

As described above, the term "ready to sign form" as used herein is meant to include any format wherein predetermined locations on the display are consistently used, from transaction to transaction, to request PIN or other signature confirmation inputs, and to display value information.

Transmission of the ARM is preferably further in accordance with the communication abilities of client MD 20. In particular, the ARM may cause the display of a link on a display portion of client MD 20, and client MD 20 may utilize the link to establish an encryption enabled connection between client MD 20 and TS 80. In the event that client MD 80 is limited to supporting SMS, or SSMS, communication is in accordance with those limitations, and the appropriate communication link is supplied and controlled by communication module 90. Optionally, information regarding the provider related to PAD 30 and/or virtual PAD 610, or to the particular transaction, is retrieved from optional provider DB 120, including without limitation a logo, a discount coupon, loyalty and preferred customer benefits or transaction formats, and utilized in preparation of the ARM. Thus, in cooperation with an ARM, discount offers may be further displayed on client MD 20.

In stage 3040, optionally responsive to a user input, an electronically signed AAM is prepared by client MD 20, and transmitted to TS 80 via network 70, preferably encrypted either via application 28 by SSMS or via secured transmission method such as SSL over GPRS or over wireless LAN such as WiFi. There is no requirement that an AAM be transmitted, as the user may allow payment by on-CE money to arrange for exit.

In stage 3050, responsive to the received AAM, TS 80 settles the transaction with optional financial settlement institute 130, and responsive to the settled transaction and received AAM transmits a TAM to all PADs 30 with authorized exit information, such as maximum tariff, or an expiration date. The TAM particularly includes the read CE identifier of stage 3000, and is stored in the PAD 30 along with the authorized exit information.

In stage 3060, client MD 20 is juxtaposed, or "tapped", to reader 40 of second PAD 30, acting as an exit PAD. Exit PAD 30 obtains an identifier of CE 25 of client MD 20, and in the event that the identifier of CE 25 of client MD 20 is consonant with a stored identifier in the database of exit PAD 30 as meeting the rules for exit, i.e. consonant with the stored authorized exit information, second PAD 30 authorizes exit by activating POEC 620 utilizing an appropriate output signal thus opening an exit gate or turnstile. Optionally, in the event that a predetermined sum was withdrawn from the on-CE money in stage 3010, and payment was arranged in responsive to a received AAM, the deducted predetermined amount is added back into the on-CE money. In another embodiment the on-CE money is deducted at stage 3060, only if a TAM was not received at second PAD 30, and no deduction is made at stage 3000.

In stage 3070, a confirmation message comprising the exit record is sent to TS 80 and stored in a transaction database (not shown). In stage 3080 a confirmation message is prepared by TS 80 and transmitted to client MD 20 via network 70.

The operation of FIGs. 7A - 7B is not meant to be limiting in any way, and complete top-up of the on-CE money may be performed as part of the transaction stages 3030 - 3070 without limitation. Additionally, and without limitation, entry and exit may be performed using only debiting and crediting of on-CE money stored on CE 25 without other forms of payment.

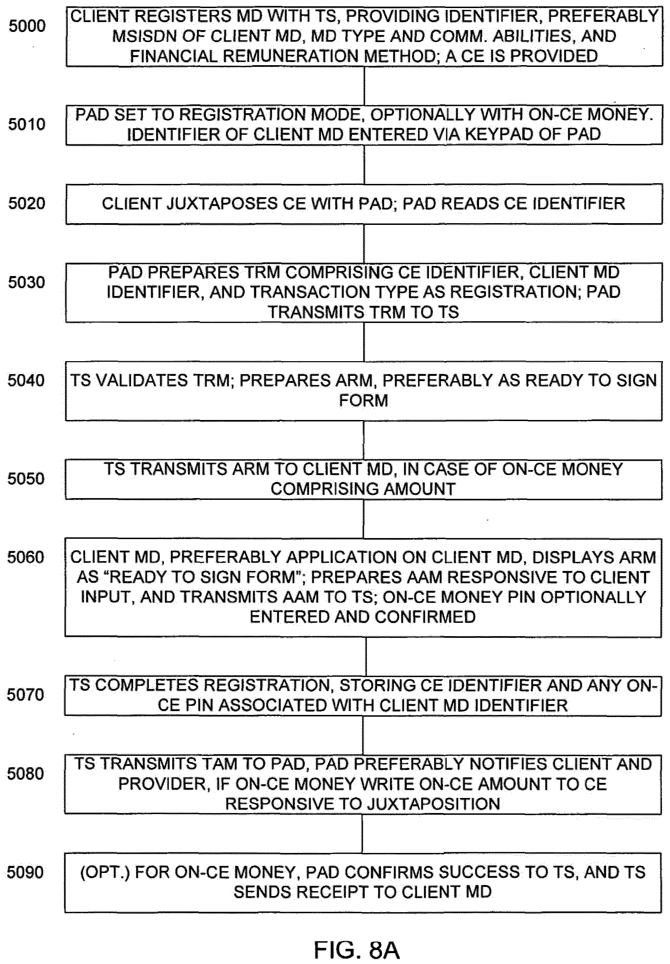

FIG. 8A illustrates a high level flow chart of the operation of PAD 30 in cooperation with a TS 80 to perform association of the CE 25 with client MD 20, and may be used in cooperation with any of transaction systems 10, 300, 400, 500, 550, 600 or 650 without limitation. This flow chart is applicable to all A,B,C types of client MD 20, however client MD 20B may advantageously perform the function described herein without benefit of a PAD 30, as will be further described.

In stage 5000, a user, hereinafter denoted a client so as to avoid confusion with a provider, registers client MD 20 for use as a payment device in advance with TS 80, providing as part of the registration process financial remuneration means such as a debit card or other bank authorization and receiving in response a personal identification number or other code, generically referred to herein as a PIN. Optionally, a plurality of financial remuneration means may be supplied; and each may be associated with a particular PIN, without limitation. Preferably, client MD 20 is provided with application 28 during the registration process ensuring encryption of the PIN to be provided during a financial transaction. Further preferably the type of client MD 20 is identified to TS 80 during registration, thus enabling communication therewith to be optimized for the actual communication preferences and various capabilities including display capabilities of client MD 20. Client MD 20 is supplied with CE 25 which may be affixed to client MD 20, or may be supplied as part of client MD 20, without limitation. The address, such as MSISDN of client MD 20 is supplied as part of the registration process.

In stage 5010, selector 55 of PAD 30 is set to registration mode, optionally via a dedicated key or a soft key, and the provider, or the client, enters the client's MSISDN or other address information of the client MD via keypad 50 of PAD 30. The registration mode may be a "registration only" mode, which is arranged to register CE 25 as associated with MD 20, or a "registration with on-CE money" mode which further establishes on-CE money onto CE 25. In stage 5020, the client juxtaposes, or taps, CE 25 of client MD 20 to reader 40 of PAD 30 and reader 40 of PAD 30 reads identification information from CE 25, i.e. reader 40 inputs the readable identifier of CE 25.

In stage 5030 PAD 30 prepares a TRM including the address information of stage 5010, the read CE 25 identification information of stage 5020, a transaction type identifier indicating that this is a registration transaction and an ID associated with PAD 30. The prepared TRM is transmitted to TS 80. In stage 5040 TS 80 checks the received TRM of stage 5030, particularly validating that both the read readable identifier of CE 25 and the provided identifier of client MD 20 have not yet been registered, and in the event that "on-CE money" establishment has been requested, TS 80 further confirms validity of financial remuneration means. TS 80 determines a processing path responsive to attributes of the TRM, particularly the below processing path is selected responsive the TRM being identified as a registration transaction. TS 80 further generates an ARM as a "ready to sign form", preferably comprising a PIN response request. Preferably, the ARM is prepared responsive to the capabilities of client MD 20, as stored on optional client DB 110 and input in stage 5000, so that the ARM will cause client MD 20 to output a visual display in a ready to sign format. In an exemplary embodiment a logo, other identifying information of the provider, or other extra information such as an advertisement is displayed in the "ready to sign form", along with the amount to be authorized and a request box requesting that the client authorize the transaction by entering the pre-registered PIN of the registration stage, as described above in relation to FIG. 1D. The "ready to sign form" is preferably thus displayed in accordance with the display parameters of client MD 20. In an embodiment wherein application 28 is provided, the ARM preferably triggers operation of application 28.

Transmission of the ARM is preferably further in accordance with the communication abilities of client MD 20. In particular, the ARM may cause the display of a link, such as an URL link, on a display portion of client MD 20, and client MD 20 may utilize the link to establish an encryption enabled connection between client MD 20 and TS 80. In the event that client MD 80 is limited to supporting SMS, or SSMS, communication is in accordance with those limitations, and the appropriate communication link is supplied and controlled by communication module 90.

In stage 5050 TS 80 transmits the ARM to client MD 20, via network 70, responsive to the address information of stage 5010. Optionally on-board application 28 is responsive to the received ARM to display the ARM in the predetermined ready to sign format. In the event that on-CE money establishment is requested, the amount of the transaction is preferably further indicated.

In stage 5060, on-board application 28, responsive to a client input approving registration, preferably by entering the PIN code provided at the registration phase of stage 5000 into the response portion of the "ready to sign form" ARM, prepares and transmits an AAM to TS 80. In the event that on-CE money is being established, preferably a PIN for on-CE money is selected by the client and confirmed. Preferably on-board application 28 transmits the AAM in an encrypted format, responsive to the capabilities of client MD 20. In a preferred embodiment, on-board application 28 is downloaded, or updated, as part of the approval process. In the absence of on-board application 28, the AAM is preferably transmitted to TS 80 as an SSMS. A temporary PIN code may be securely provided to the client in a different channel than used to download on-board application 28. The AAM may further include verification of the client CE identification, or a portion thereof, gained by the client from the application or input of the PAD 30, so to verify that the user answering the ARM is the one actually holds the juxtaposed CE.

In stage 5070, TS 80, responsive to the received AAM of stage 5060, confirms the PIN of the AAM with the pre-registered PIN and completes customer registration, particularly storing a readable identifier of CE 25 associated with an identifier of client MD 20 in optional client database 110. In the event of establishment of on-CE money, the account associated with client MD 20 is debited, and an on-CE account for client MD 20 is established, further associated with any on-CE PIN of stage 5060. In stage 5080, TS 80 transmits a TAM to PAD 30 indicating success or failure of the registration process, and PAD 30, audibly or visually, or a combination thereof, indicates the success or failure of the registration process. Optionally, PAD 30 further prompts a user of client MD 20 to again juxtapose CE 25 to Reader 40 and confirm that the process confirmation message is for the present client MD 20 and that the CE 25 identifier is correct. In the event of on-CE money registration, the on-CE money is further written to CE 25 responsive to the additional juxtaposition, and in optional stage 5090 a confirmation of successful on-CE money establishment is transmitted to TS 80 and TS 80 further transmits a receipt confirmation to client MD 20. In an alternative embodiment, debiting of the account associated with client MD 20 is performed responsive to the confirmation of successful on-CE money establishment.

Thus, the registration process of FIG. 8A correlates CE 25 with an address identifier for client MD 20 such as an MSISDN, without providing any financial information to PAD 30.

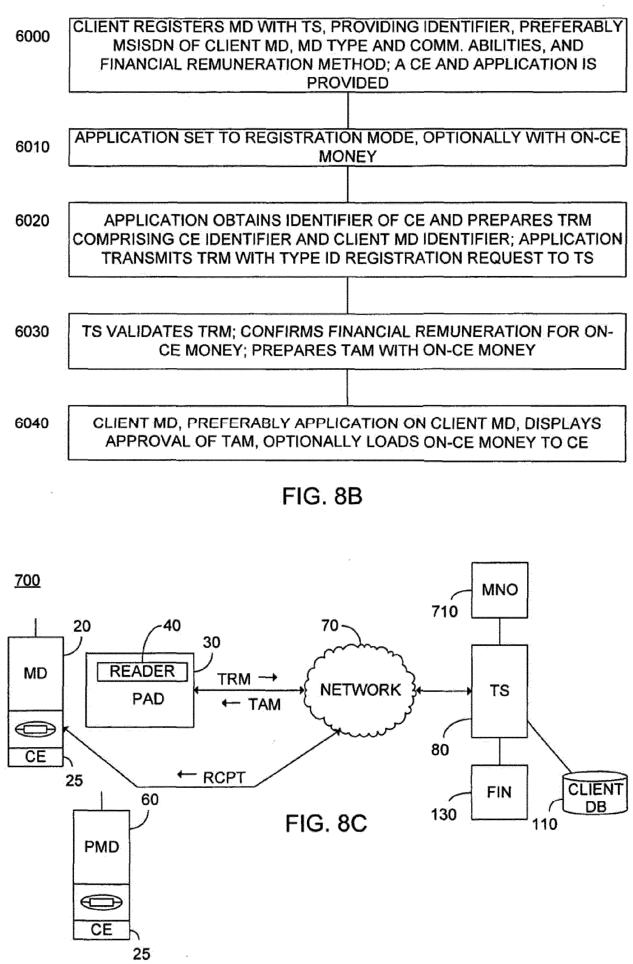

FIG. 8B illustrates a high level flow chart of the operation of on-board application 28 of MD 20 to register CE directly with TS 80 without requiring PAD 30 thus providing a 'register on the go' advantage and may be utilized with any of transaction systems 10, 300,400, 500, 550, 600 or 650 without limitation. This flow is preferably utilized in connection with client MD 20B, wherein communication is provided between application 28 and CE 25 B.

In stage 6000, a client registers client MD 20 for use as a payment device in advance with TS 80, providing as part of the registration process financial remuneration means such as a debit card or other bank authorization and receiving in response a personal identification number or other code, generically referred to herein as a PIN. Optionally, a plurality of financial remuneration means may be supplied; and each may be associated with a particular PIN, without limitation. Further preferably the type of client MD 20 is identified to TS 80 during registration, thus enabling communication therewith to be optimized for the actual communication preferences and display capabilities of client MD 20. The address, such as MSISDN of client MD 20 is supplied as part of the registration process. An application 28 is provided, application 28 may run on the main processor of client MD 20 or on a controller associated with CE 25, without limitation.

In stage 6010, a registration mode is activated in application 28, and preferably a registration request is signed by a PIN. The registration mode may include one or both of online money and on-CE money. In stage 6020, application 28 prepares a TRM comprising the PIN, user ID, and CE 25 identification information read by controller 27 of client MD 20 responsive to application 28. An identification code such as the MSISDN of client MD 20, a transaction type identifier indicating that this is a registration request message, and the prepared TRM is transmitted to TS 80.

In stage 6030, TS 80 checks the received registration request of stage 6020, particularly validating that both the read CE 25 identification information and the provided identifier of client MD 20 have not yet been assigned, and in the event that "on-CE money" establishment has been requested, TS 80 further confirms validity of financial remuneration means. TS 80 determines a processing path responsive to attributes of the TRM, particularly the below processing path is selected responsive the TRM being identified as a registration transaction sourced by client MD 20. TS 80 further generates and transmits to MD 20 via network 70 a TAM, which indicates success, or failure. In stage 6040, application 28 indicates success or failure of the registration process responsive to the received TAM of stage 6030 and optionally loads any received on-CE money onto CE 25.

Thus, the registration process of FIG. 8B correlates CE 25 with an identifier for client MD 20, such as an MSISDN, without requiring PAD 30.

FIG. 8C illustrates a high level block diagram of an exemplary embodiment of a transaction system 700 in cooperation with a PAD 30 to purchase air time for a client MD 20 from a mobile network operator (MNO) 710. Transaction system 700 further comprises an optional provider MD 60 having a CE 25, a network 70, a TS 80, a financial settlement institute 130 and an optional client DB 110. Each of MNO 710 and financial settlement institute 70 are in communication with TS 80, and TS 80 is further in communication with each of PAD 30, and client MD 20 via network 70. Optionally, TS 80 is further in communication with provider MD 60 via network 70 (not shown). PAD 30 is optionally provided with reader 40, and client MD 20 is optionally provided with CE 25.

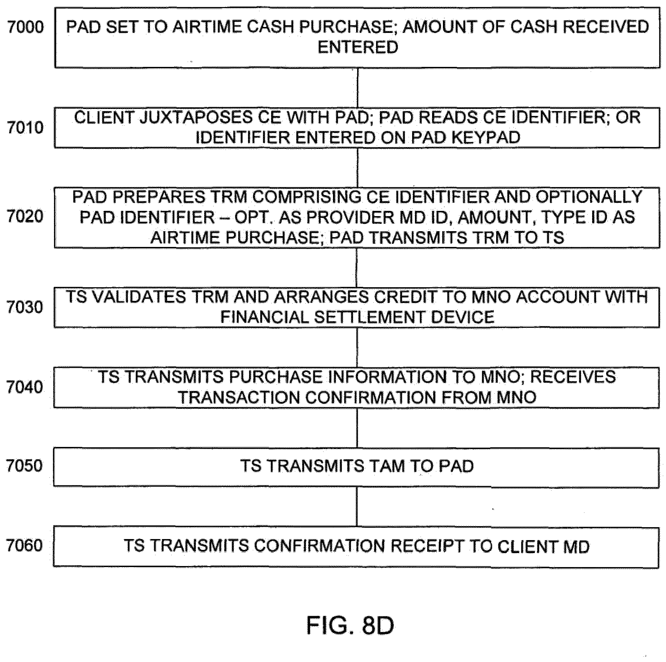

FIG. 8D illustrates a high level flow chart of the operation of transaction system 700 of FIG. 8C in accordance with an exemplary embodiment, the figures being described herein together for ease of understanding and clarity.

In stage 7000, PAD 30 is set to airtime cash purchase, and the amount of received cash is entered into PAD 30. In one embodiment a security code of the provider is further entered or provider MD 60 is juxtaposed or "tapped" to prevent unauthorized purchases. In stage 7010, client MD 20 is juxtaposed or "tapped" to reader 40 of PAD 30, and PAD 30 reads the readable identifier from CE 25. Alternatively, an identifier of client MD 20 is entered onto a keypad of PAD 30, such as keypad 50 described above in relation to FIG. 2A.

In stage 7020, a TRM comprising the reads or inputs identifier of stage 7010, and the entered amount of stage 7000, an PAD ID, and preferably any security information. The prepared TRM is in an exemplary embodiment similar in all respects to TRM 250 described above. The prepared TRM is further transmitted to TS 80, preferably encrypted.

In stage 7030, the received TRM is validated, and the appropriate processing path is determined responsive to an attribute of the TRM. In particular, responsive to the type indicator that this cash air time purchase, credit to the MNO associated with client identifier of the TRM is arranged responsive to the entered received amount with financial settlement institute 130. In particular the MNO account is credited with the received money from the merchant account, and a transaction receipt is generated by financial settlement institute 130. There is no requirement that a single MNO 710 be supported, and multiple MNOs 710 may be supported without exceeding the scope. The MNO associated with the client identifier is retrieved from optional client DB 110.

In stage 7040 TS 80 transmits the transaction device to MNO 710 with an identifier of client MD 20, in particular the MSISDN or other similar identifier. In response MNO 710 provides a transaction confirmation to TS 80. In stage 7050 TS 80 transmits a TAM to PAD 30, and PAD 30 responds with an audible and/or visual indicator of success. In stage 7060, TS 80 further transmits a confirmation receipt to client MD 20 responsive to the identification information of the TRM of stage 7020.

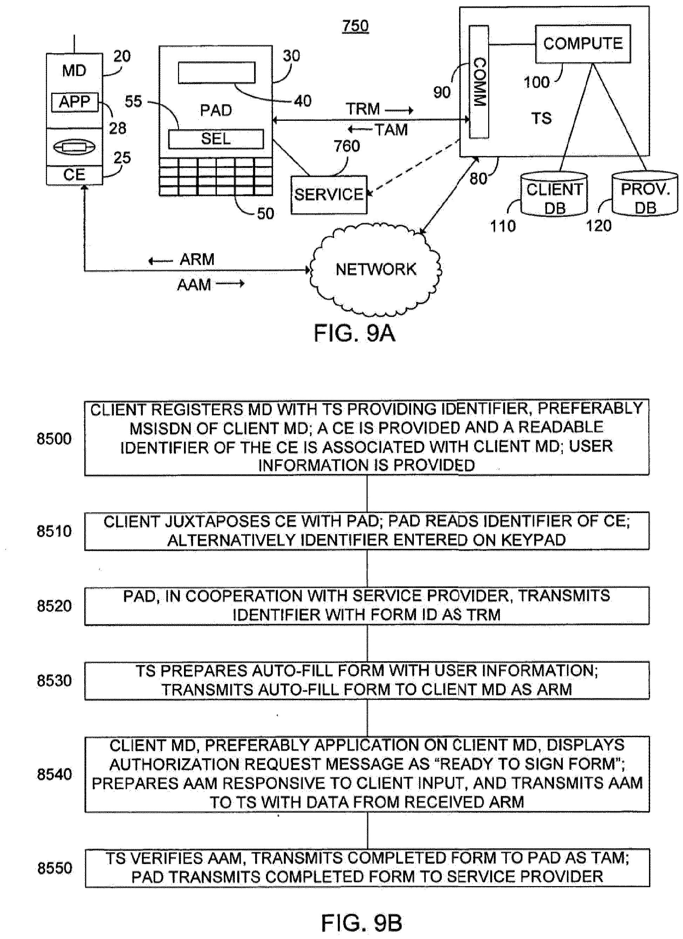

FIG. 9A illustrates a high level block diagram of an exemplary embodiment of a transaction system 750 in cooperation with a client MD 20 having a CE 25 affixed thereon wherein a data information form is provided to a service provider 760 in cooperation with optional client database 110 of TS 80 and FIG. 9B illustrates a high level flow chart of the operation of the system of FIG. 9A in accordance with an exemplary embodiment, FIGs. 9A and 9B being described herein together for ease of understanding and clarity. Transaction system 750 of FIG. 9A further comprises a PAD 30 having a reader 40, a keypad 50 and a selector 55, PAD 30 is in communication with a service provider 760, and optionally incorporated therein, and a network 70, preferably implemented as a wireless network, such as a cellular network. Alternatively, TS 80 may be in communication with service provider 760 as indicated by the dashed line.

Client MD 20 is described as having CE 25 affixed thereon, however this is not meant to be limiting in any way, and CE 25 may be formed as part of client MD 20, installed therein or associated therewith without exceeding the scope. Client MD 20 is illustrated as having an application 28 running on a processor of MD 20 and client MD 20 is in bidirectional wireless communication with TS 80 via network 70. TS 80 comprises communication module 90 and computing device 100, and is in communication with optional client DB 110 and optional provider DB 120. Advantageously, information needed to determine the MSISDN or other address of client MD 20 is provided directly by CE 25 associated with client MD 20, or entered by a user of client MD 20 on keypad 50, as will be described further below. MD 20 may be implemented as an MD 20B as described in relation to FIG. 1B, wherein communication between CE 25 and application 28 is provided without exceeding the scope.

In operation, in stage 8500, a client registers client MD 20 for use as an identifying device in advance with TS 80, providing as part of the registration process user personal information and the address of client MD 20, and receiving in response a personal identification number or other code, generically referred to herein as a PIN. Preferably, client MD 20 is provided with application 28 during the registration process Further preferably the type of client MD 20 is identified to TS 80 during registration, thus enabling communication therewith to be optimized for the actual communication abilities and display capabilities of client MD 20. Client MD 20 is supplied with CE 25 which may be affixed to client MD 20, or may be supplied as part of client MD 20, without limitation, and an identifier of CE 25 is associated with the address of client MD 20.

Thus, during the registration process an identifier of CE 25, an address of client MD 20 and user personal information is associated with client MD 20, and stored in optional client database 110. There is no requirement for pre-arrangement of a financial remuneration means, and the process described below may be performed in the absence of any other financial remuneration means.

In stage 8510 the client juxtaposes, or taps, CE 25 to reader 40 of PAD 30 and reader 40 of PAD 30 obtains the identification information from CE 25, and optionally authenticates CE 25. Alternatively, in the absence of CE 25 the client enters an identification number, such as the address of client MD 20 on keypad 50 of PAD 30.

Responsive to an input to service provider 760, or a setting of selector 55, and the received identification information of stage 8510, in stage 8520 PAD 30 prepares a TRM comprising the identification information of stage 8510 and a transaction type identifier indicating the particular form of service provider 760 which is to be filled out with user information as described above in relation to stage 8500 and transmits the prepared TRM to TS 80. The TRM is in all respects similar to TRM 250 described above, with form information filled in other field 262.

TS 80 determines a processing path responsive to attributes of the TRM, particularly the below processing path is selected responsive the TRM being identified as a request to fill in a particular form with personal information stored on optional client database 110.

In stage 8530, TS 80, responsive to the received TRM of stage 8520, optionally authenticates the received TRM, and prepares an auto-fill form responsive to the information stored on optional client database 110. In particular, in the event that in stage 8510 an identifier of CE 25 was read, the address of client MD 20 is retrieved from optional client database 110, and user personal information is further retrieved. The requested form is further retrieved from optional provider database 120, responsive to the transaction type identifier of the TRM and fields of the particular requested form are filled in with information retrieved from optional client database 110. Some of the fields may not be filled in, such as in a case that the information is not found in optional client database 110. Preferably, the form is further formatted so as to be optimized, or fitting, for the display of client MD 20, responsive to client MD 20 information stored on optional client database 110 and input in stage 8500. The requested form is transmitted to client MD 20, via network 70 as an ARM, responsive to the retrieved address of client MD 20, or client MD 20, in accordance with communication abilities of client MD 20, stored on optional client DB 110.

In stage 8540, client MD 20, preferably responsive to application 28, displays the received authorization request message with the preferably pre-filled fields as described above in relation to stage 8530, as a "ready to sign form", requesting authorization and optionally a PIN code to be entered in a pre-designed location on the display of client MD 20. The client of client MD 20 may further fill the un-filled fields in the form. In an exemplary embodiment application 28 is implemented responsive to the received ARM of stage 8530, to respond with an AAM. The client may optionally erase certain pre-filled fields, thus allowing the client to prevent the release of personal information without authorization. Application 28, or the client in cooperation with client MD 20, transmits the signed authorization approval message as an AAM to TS 80 via network 70. Preferably, user information and any entered PIN is encrypted by application 28.

In stage 8550 TS 80 verifies, or authenticates, the received authorization approval message of stage 8540, and transmits the completed form to PAD 30, as a TAM. PAD 30 further transmits the completed form to service provider 760. Alternatively, TS may transmit the completed form directly to service provider 760, as a TAM. In one further embodiment, TS 80 updates optional client database 110 with client filled pieces of information, preferably responsive to client pre-approval, thus increasing its ability to fill larger parts of future forms.

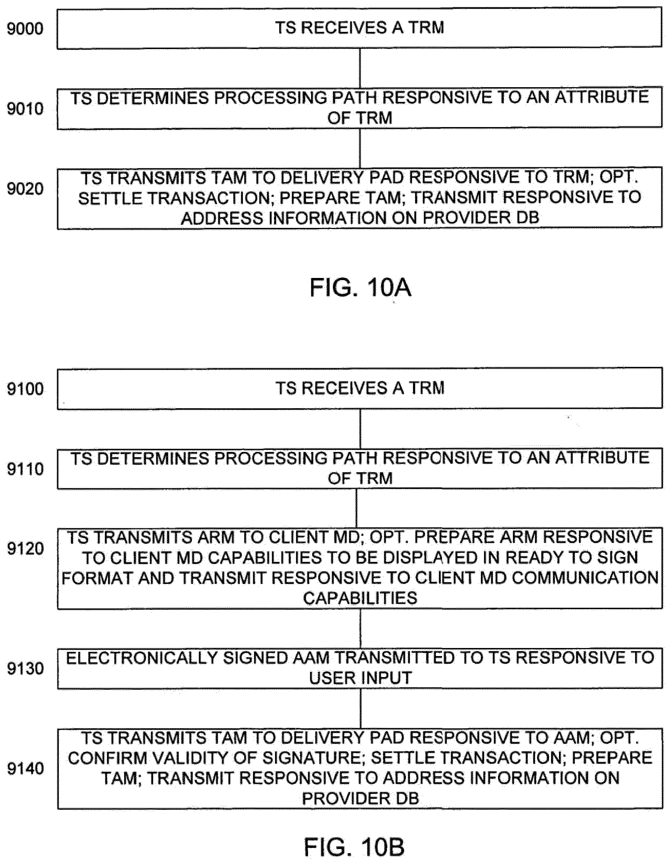

FIG. 10A illustrates a high level flow chart of a processing path of TS 80 responsive to an attribute of a received TRM to respond with a TAM, which may be used in cooperation with any of transaction systems 10, 300, 400, 500, 550, 600, 650 or 750 without limitation. Such a processing path may be selected responsive to a particular PAD ID, or to a transaction amount of the TRM less than a predetermined value without limitation.

In stage 9000 a TRM is received by TS 80. In stage 9010 the attributes of the received TRM are analyzed, to determine the appropriate processing path. In stage 9020, responsive to attributes of TRM the processing path associated with automatic TAM response is selected and a TAM is transmitted to PAD 30 responsive to the received electronically signed TRM of stage 9000. Preferably, for each PAD ID a destination address is stored on optional provider DB 120 and the TAM is transmitted to PAD 30 responsive to the destination address of the PAD ID of the TRM. There is no requirement that the sourcing PAD 30 be the destination of the TAM, and an additional field comprising a destination PAD ID may be included without exceeding the scope.

In an exemplary embodiment the transmission of the TAM of stage 1090 comprises: settling the transaction via optional financial settlement institute 130; preparing the TAM; and transmitting the TAM to PAD 30, responsive to address information stored on optional provider DB 120. PAD 30, responsive to the received TAM of stage 9020, preferably provides a visible, and/or audible indication that the transaction has been approved, and allows provision of the transaction or service.

FIG. 10B illustrates a high level flow chart of a processing path of TS 80 responsive to an attribute of a received TRM to respond with an ARM, which may be used in cooperation with any of transaction systems 10, 300, 400, 500, 550, 600, 650 or 750 without limitation. Such a processing path may be selected responsive to a particular PAD ID, or to a transaction amount of the TRM greater than a predetermined value without limitation.

In stage 9100, a TRM is received by TS 80. In stage 9110 the attributes of the received TRM are analyzed, to determine the appropriate processing path.

In stage 9120, an ARM is transmitted, via communication module 90, to client MD 20 requesting approval of the transaction, responsive to the received TRM of stage 9100. Preferably, the ARM is prepared responsive to the capabilities of client MD 20, as stored on optional client DB 110, so that the ARM will cause client MD 20 to output a visual display in a ready to sign format. In an exemplary embodiment a logo, other identifying information of the provider, or other extra information such as an advertisement is displayed in the "ready to sign form", along with the amount to be authorized and a request box requesting that the client authorize the transaction by entering the pre-registered PIN as described above. The "ready to sign form" is preferably thus displayed in accordance with the display parameters of client MD 20. In an embodiment wherein application 28 is provided, the ARM preferably triggers operation of application 28. Transmission of the ARM is preferably further in accordance with the communication abilities of client MD 20.

In stage 9130, responsive to a user input, an electronically signed AAM is prepared by client MD 20, and transmitted to TS 80 via network 70, preferably encrypted either via application 28 by SSMS or via secured transmission method such as SSL over GPRS or over wireless LAN such as WiFi. In stage 9140, responsive to the received AAM, a TAM is transmitted to PAD 30 responsive to the received AAM. In one embodiment, the ARM and AAM each comprise the PAD ID of the TRM of stage 9100, and in another embodiment a transaction identifier is utilized by TS 80 to link up the returned AAM with the TRM of stage 9100. The TAM is transmitted to PAD 30 responsive to the destination address of the PAD ID of the TRM of stage 9100. There is no requirement that the sourcing PAD 30 of the TRM be the destination of the TAM, and an additional field comprising a destination PAD ID may be included without exceeding the scope.

In an exemplary embodiment the transmission of the TAM of stage 9140 comprises: confirming the validity of the electronically signed AAM responsive to a key stored on optional client DB 110 in cooperation with a read identifier of client MD 20 of the TRM of stage 9000; settling the transaction via optional financial settlement institute 130; preparing the TAM; and transmitting the TAM to PAD 30, responsive to address information stored on optional provider DB 120. PAD 30, responsive to the received TAM of stage 9140, preferably provides a visible, and/or audible indication that the transaction has been approved, and allows provision of the transaction or service.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

Unless otherwise defined, all technical and scientific terms used herein have the same meanings as are commonly understood by one of ordinary skill in the art to which this invention belongs. Although methods similar or equivalent to those described herein can be used in the practice or testing of the present invention, suitable methods are described herein.

All publications, patent applications, patents, and other references mentioned herein are incorporated by reference in their entirety. In case of conflict, the patent specification, including definitions, will prevail. In addition, the materials, methods, and examples are illustrative only and not intended to be limiting.

The terms "include", "comprise" and "have" and their conjugates as used herein mean "including but not necessarily limited to". The term "connected" is not limited to a direct connection, and connection via intermediary devices is specifically included.

It will be appreciated by persons skilled in the art that the present invention is not limited to what has been particularly shown and described hereinabove. Rather the scope of the present invention is defined by the appended claims and includes both combinations and sub-combinations of the various features described hereinabove as well as variations and modifications thereof, which would occur to persons skilled in the art upon reading the foregoing description.

The present invention is further defined by the following items:
1. A transaction system comprising:
   a transaction server comprising a computing device and a communication module, said transaction server arranged to:
   receive a transaction request message comprising an identifier associated with a client mobile device, the received transaction request message received via said communication module; and
   process the received transaction request message in accordance with one of a plurality of processing paths responsive to an attribute of the received transaction request message, the plurality of processing paths comprising a first processing path wherein said transaction server is arranged to:
      in the event that the received transaction request message is electronically signed, transmit, via said communication module, a transaction authorization message to a provider associated device responsive to the received electronically signed transaction request message; and
      in the event that the received transaction request message is not electronically signed:
         transmit, via said communication module, an authorization request message to the client mobile device responsive to the received not electronically signed transaction request message; and
         transmit, via said communication module and responsive to a received authorization approval message from the client mobile device, a transaction authorization message to the provider associated device.
2. The transaction system according to item 1, wherein the received transaction request message further comprises a transaction type identifier, the attribute comprising the particular transaction type identifier.
3. The transaction system according to item 1, wherein the transaction request message further comprises a provider associated device identifier, wherein the provider associated device identifier is associated with a particular transaction type, and wherein the attribute is responsive to the particular transaction type.
4. The transaction system according to item 1, further comprising:
   a client database in communication with said transaction server, said client database comprising, for each of a plurality of client mobile devices, an address of the client mobile device associated with a readable identifier of a contactless element; and
   a provider database in communication with said transaction server, said provider database comprising, for each of a plurality of provider associated devices, address information of the provider associated device.
5. The transaction system according to item 4, wherein said provider database further comprises transaction processing rules for each of the plurality of provider associated devices, wherein the particular one of the plurality of processing paths is selected responsive to the respective transaction processing rule of said provider database.
6. The transaction system according to item 4, wherein the plurality of processing paths further comprises a second processing path associated with a form request, the second processing path comprising:
   load a form responsive to the received transaction request message;
   add information to said loaded form responsive to said client database;
   transmit, via said communication module, an authorization request message to the client mobile device responsive to the received transaction request message, the authorization request message comprising said added information; and
   releasing said form with said added information responsive to a received authorization approval message from the client mobile device.
7. The transaction system according to item 4, wherein said client database further comprises, for each of the plurality of client mobile devices, capabilities of the client mobile device, and wherein in the event that an authorization request message is transmitted to the client mobile device, the server is further arranged to:
   prepare the authorization request message responsive to the capabilities of the client mobile device stored on said client database so that the transmitted authorization request message causes the client mobile device to output a visual display in a ready to sign format.
8. The transaction system according to item 4, wherein the client database further comprises electronic signature authentication information for each of the plurality of client mobile devices, and wherein the transmission of the transaction authorization message responsive to said received electronically signed transaction request message, comprises the stages of:
   confirm the validity of the electronically signed transaction request message responsive to the electronic signature authentication information of said client database;
   prepare the transaction authorization message responsive to said received electronically signed transaction request message; and
   transmit said prepared transaction authorization message to the provider associated device responsive to address information of said provider database.
9. The transaction system according to item 1, further comprising at least one provider associated device comprising a reader arranged to read a contactless element secured in relation to the client mobile device to thereby obtain the identifier associated with the client mobile device.
10. The transaction system according to item 1, further comprising at least one provider associated device constituted of one of a web server, an interactive voice response server, a short messaging service server, an unstructured supplementary service data server; and a call center.
11. The transaction system according to item 1, wherein said plurality of processing paths are updatable.
12. The transaction system according to item 11, further comprising at least one provider associated device, said at least one provider associated device exhibiting a selector, and wherein the received transaction request message further comprises a transaction type identifier responsive to a setting of said selector, said selector arranged to provide an updatable set of transaction type identifiers responsive to a communication from said transaction server, and wherein the attribute comprises the transaction type identifier.
13. The transaction system according to item 1, wherein the plurality of processing paths further comprises a third processing path, comprising:
   transmit, via said communication module, an authorization request message to the client mobile device responsive to the received transaction request message.
14. The transaction system according to item 1, wherein the plurality of processing paths further comprises a fourth processing path, comprising:
   transmit, via said communication module, an authorization request message to the client mobile device responsive to the received transaction request message; and
   responsive to a received authorization approval message from the client mobile device transmit, via said communication module, a transaction authorization message to the provider associated device.
15. The transaction system according to item 1, further comprising the client mobile device, the client mobile device comprising a contactless element secured in relation to the client mobile device and arranged to output the identifier associated with the mobile device responsive to a reader.
16. The transaction system according to item 15, wherein the client mobile device further comprises a controller, said controller in communication with the contactless element and arranged to load an electronic signature onto a port of said contactless element responsive to a user input, the contactless element arranged to output the loaded electronic signature responsive to a reader.
17. The transaction system according to item 15 or item 16, wherein the client mobile device is arranged to transmit the transaction request message.
18. The transaction system according to item 17, further comprising a provider associated device comprising a provider identifier, wherein the client mobile device is arranged to read information comprising the provider identifier of said provider associated device and utilize said read provider identifier to create the transmitted transaction request message.
19. The transaction system according to item 16, wherein the client mobile device comprising an application arranged to automatically initiate responsive to a read activity of the contactless element.
20. The transaction system according to item 1, wherein the plurality of processing paths further comprises a fifth processing path comprising wherein in the event that said attribute is an entry request:
   confirming, responsive to the received transaction request message, that entry is authorized; and
   in the event entry is authorized, transmitting, via said communication module, a transaction authorization message to an entry point.
21. A computer implemented method for performing a transaction responsive to a mobile device, the computer implemented method comprising:
   receiving a transaction request message comprising an identifier associated with a client mobile device;
   processing the received transaction request message in accordance with one of a plurality of processing paths responsive to an attribute of the received transaction request message, the plurality of processing paths comprising a first processing path comprising the stages of:
      in the event that the received transaction request message is electronically signed, transmitting a transaction authorization message to a provider associated device responsive to the received electronically signed transaction request message; and
      in the event that the received transaction request message is not electronically signed:
         transmitting an authorization request message to the client mobile device responsive to the received not electronically signed transaction request message; and
         responsive to a received authorization approval message from the client mobile device transmitting a transaction authorization message to the provider associated device.
22. The computer implemented method according to item 21, wherein the received transaction request message further comprises a transaction type identifier, the attribute comprising the particular transaction type identifier.
23. The computer implemented method according to item 21, wherein the transaction request message further comprises a provider associated device identifier, wherein the provider associated device identifier is associated with a particular transaction type identifier and wherein the attribute is responsive to the particular transaction type.
24. The computer implemented method according to item 21, further comprising:
   storing, for each of a plurality of client mobile devices, client information comprising:
      an address associated with the client mobile device associated
   with a readable identifier of a contactless element,
      and
   storing, for each of a plurality of provider associated devices, provider information comprising:
      address information of the provider associated device.
25. The computer implemented method according to item 24, wherein said stored provider information further comprises transaction processing rules, wherein the particular one of the plurality of processing paths is selected responsive to the respective stored transaction processing rule.
26. The computer implemented method according to item 24, wherein said stored client information further comprises, for each of the plurality of client mobile devices, capabilities of the client mobile device, and
   wherein in the event that an authorization request message is transmitted to the client mobile device, the method further comprises:
   preparing the authorization request message responsive to the stored capabilities of the client mobile device so that said transmitted authorization request message causes the client mobile device to output a visual display in a ready to sign format.
27. The computer implemented method according to item 24, wherein said stored client information further comprises electronic signature authentication information and wherein said transmitting the transaction authorization message responsive to the received electronically signed transaction request message comprises:
   confirming the validity of the received electronically signed transaction request message responsive to the stored electronic signature authentication information;
   preparing the transaction authorization message responsive to the received electronically signed transaction request message; and
   transmitting said prepared transaction authorization message to the provider associated device responsive to the stored respective address information.
28. The computer implemented method according to item 21, wherein the plurality of processing paths further comprises a second processing path associated with a form request, the second processing path comprising:
   loading a form responsive to the received transaction request message;
   adding information to said loaded form responsive to said stored client information;
   transmitting an authorization request message to the client mobile device responsive to the received transaction request message, the authorization request message comprising said added information; and
   releasing said form with said added information responsive to a received authorization approval message from the client mobile device.
29. The computer implemented method according to item 21, further comprising reading a contactless element secured in relation to the client mobile device to thereby obtain the identifier associated with the client mobile device.
30. The computer implemented method according to item 21, wherein said plurality of processing paths are updatable.
31. The computer implemented method according to item 30, further comprising:
   storing a plurality of selectable transaction types;
   for each one of said stored plurality of transaction types, producing an updatable transaction type identifier; and
   producing the transaction request message, wherein said produced transaction request message comprises the respective transaction type identifier associated with a selected transaction type, wherein the attribute comprises the transaction type identifier.
32. The computer implemented method according to item 30, further comprising updating at least one of said updatable transaction type identifiers.
33. The computer implemented method according to item 21, wherein the plurality of processing paths further comprises a third processing path, comprising:
   transmitting an authorization request message to the client mobile device responsive to the received transaction request message.
34. The computer implemented method according to item 21, wherein the plurality of processing paths further comprises a fourth processing path, comprising:
   transmitting an authorization request message to the client mobile device responsive to the received transaction request message; and
   responsive to a received authorization approval message from the client mobile device transmitting a transaction authorization message to the provider associated device.
35. The computer implemented method according to item 21, further comprising outputting the identifier associated with the mobile device responsive to a reader reading a contactless element secured in relation to the client mobile device.
36. The computer implemented method according to item 35, further comprising:
   loading an electronic signature onto the contactless element; and
   reading said loaded electronic signature.
37. The computer implemented method according to item 21, wherein said transaction request message is sourced by the client mobile device.
38. The computer implemented method according to item 37, further comprising:
   reading the provider identifier of said provider associated device and utilizing said read provider identifier to create the transmitted transaction request message.
39. The computer implemented method according to item 21, wherein the plurality of processing paths further comprises a fifth processing path comprising wherein in the event that the attribute is an entry request:
   confirming, responsive to the received transaction request message, that entry is authorized; and
   in the event entry is authorized, transmitting a transaction authorization message to an entry point.
40. A client mobile device comprising a controller and a contactless element in communication with said controller, wherein said controller is arranged to, responsive to one of a plurality of potential user inputs:
   enable a readable port of said contactless element to output an identifier;
   enable a readable port of said contactless element to output an identifier and an indication that an automatic electronic signature has been received; and
   enable a readable port of said contactless element to output an identifier and an indication that an electronic signature responsive to a user input code has been received.
41. A transaction system comprising the client mobile device according to item 40, the transaction system comprising a provider associated device, the provider associated device comprising a reader, wherein said client mobile device readable port is in communication with said reader, said provider associated device arranged to read via said reader said output from said readable port of said contactless element and determine, responsive to the existence or absence of said indication, whether said provider associated device or said mobile device is to transmit a transaction request message.

## Claims

1. A transaction system (10), comprising a transaction server, the transaction server configured to:
receive, from a provider associated device (30) and via a first communication link within a network (70), a transaction request message prepared at the provider associated device (30) and including an amount of a transaction, an identifier of a client mobile device, and an identifier (32) of the provider associated device (30), the identifier of the client mobile device being read by the provider associated device (30) from the client mobile device via short range communication between a contactless element of the client mobile device and a reader (40) of the provider associated device (30);
determine if the transaction request message meets a criterion;
if the transaction request message meets the criterion:
prepare a first transaction authorization message based on the transaction request message; and
transmit, based on the identifier (32) of the provider associated device (30), to the provider associated device (30) and via the first communication link, the first transaction authorization message, such that the provider associated device (30), in response to receiving the first transaction authorization message, allows provisioning of the transaction; and
if the transaction request message does not meet the criterion:
prepare an authorization request message based on the transaction request message; and
transmit, based on the identifier of the client mobile device, to the client mobile device, and via a second communication link within the network (70), the authorization request message to obtain authorization from the client mobile device for the transaction, the second communication link being different than the first communication link;
receive from the client mobile device an authorization approval message representing approval of the transaction;
prepare a second transaction authorization message based on the authorization approval message; and
transmit, to the provider associated device (30) and based on the identifier (32) of the provider associated device (30), the second transaction authorization message such that the provider associated device (30), in response to receiving the second transaction authorization message, executes the transaction.

2. The transaction system of claim 1, wherein:
the transaction server is configured to determine if the transaction request message meets the criterion by determining if the transaction request message includes an electronic signature,
the transaction request message meets the criterion if the transaction request message includes the electronic signature, and
the transaction request message does not meet the criterion if the transaction request message does not include the electronic signature.

3. The transaction system of claim 1, wherein:
the transaction server is configured to determine if the transaction request message meets the criterion by determining if the transaction request message includes an electronic signature and if the amount of the transaction is less than a predetermined value,
the transaction request message meets the criterion if the transaction request message includes the electronic signature and the amount of the transaction is less than the predetermined value, and
the transaction request message does not meet the criterion if the transaction request message does not include the electronic signature or the amount of the transaction is not less than the predetermined value.

4. The transaction system of any one of the preceding claims, wherein:
the transaction server is configured to:
determine if the transaction request message meets the criterion by:
determining if the transaction request message includes an electronic signature; and
if the transaction request message does not include the electronic signature:
determining if the amount of the transaction is less than a predetermined value,
the transaction request message meets the criterion if the transaction request message does not include the electronic signature and the amount of transaction is less than a predetermined value, and
the transaction request message does not meet the criterion if the transaction request message does not include the electronic signature and the amount of the transaction is not less than a predetermined value.

5. The transaction system of any one of claims 2-4, wherein the electronic signature is generated by the client mobile device based at least in part on at least one of:
a user input at the client mobile device, the user input matching a pre-registered personal identification number accessible by the transaction server; or
a selection of a cryptographic key stored at the client mobile device, the selection being based on the personal identification number.

6. The transaction system of any one of claims 2-4, wherein the electronic signature is (i) generated by the client mobile device without user input at the client mobile device and (ii) read by the provider associated device (30) from the client mobile device via short range communication between the contactless element of the client mobile device and the reader (40) of the provider associated device (30),
the transaction server is configured to prepare the first transaction authorization message based at least in part on the electronic signature.

7. The transaction system of any one of claims 2-6, wherein the electronic signature is encrypted with a one-time code generated by a pseudo-random code generator.

8. The transaction system of any one of the preceding claims, further comprising:
a database in communication with the transaction server, the database configured to store an address of the client mobile device and associated with the identifier of the client mobile device,
the transaction configured to transmit the authorization request message to the client mobile device via the second communication link based on the address of the client mobile device.

9. The transaction system of any one of the preceding claims, wherein the provider associated device (30) is one of a web server, an interactive voice response server, a short messaging service server, an unstructured supplementary service data server, or a call center device.

10. The transaction system of any one of the preceding claims, wherein the first communication link includes the provider associated device (30) and wherein the second communication link does not include the provider associated device (30).

11. The transaction system of any one of the preceding claims, wherein the transaction server is configured to be in communication with a database, the database including an encryption key related to the client mobile device.

12. The transaction system of any one of the preceding claims, wherein the authorization approval message includes an electronic signature generated by the client mobile device, the electronic signature based at least in part on user input at the client mobile device.

13. The transaction system of any one of the preceding claims, wherein the transaction server is configured to transmit the second transaction authorization message to the provider associated device (30) via the first communication link.

14. The transaction system of any one of the preceding claims, wherein the first communication link does not include the client mobile device.

15. The transaction system of any one of the preceding claims, wherein the authorization request message includes a ready-to-sign form and a monetary value, the ready-to-sign form being configured to receive a pre-registered personal identification number associated with the user.
